# EUROPEAN PATENT APPLICATION

(11) **EP 0 856 544 A1**
(43) Date of publication of application: **05.08.1998**
(21) Application number: 97200242.2
(22) Date of filing: 31.01.1997
(51) Int. Cl.: C08G 81/02, C08G 77/442, C08F 283/12

(54) **Branched polymers, their preparation and use**

(71) Applicant: DSM N.V., 6411 TE Heerlen (NL)
(72) Inventor: Bostoen, Claude Leo, 3740 Bilzen (BE); Janssen, Koen Jan Gerarda, 3740 Bilzen (BE); Tacx, Jacobus Christinus Josephus Franciscus, 6041 XN Roermond (NL)

(57) **Abstract**

A branched polymer characterized in that the polymer is in the form of a comb, star, nanogel or any structural combination thereof comprising a plurality of polyolefin arms selected from the group comprising polymers of 1-alkenes or combinations thereof linked to a polymer backbone, said backbone having repeating units containing a group selected from the group consisting of aliphatic groups, aromatic groups, heteroatom containing groups and combinations thereof and wherein the polyolefin arms have a polydispersity equal to or less than 1.8.

## Description

This invention relates to branched polymers and particularly to branched polymers containing a polymeric backbone with branches extending therefrom in which the branches are formed of polyolefins. The invention further relates to a process to prepare the branched polymer.

The invention also relates to a process to prepare the polyolefin branches.

The invention further relates to the use of the branched polymers as lubricant and fuel additives, as impact improvers and as rheology modifiers.

The invention also relates to a composition comprising a branched polymer.

Branched polymers are known in the art. One such example are asymmetrical radial polymers as described in U.S. Patent 5,302,667. These asymmetrical radial polymers are sometimes referred to as star-shaped polymers. These polymers are especially suitable as viscosity index improvers. The star-shaped polymers have arms that are coupled via a coupling agent. The polymer is asymmetric with respect to the molecular weight of the arms which arms may be homo- or copolymers. When the arms are homopolymers the arms are made of conjugated diolefins. When the arms are copolymers the arms are made of two or more conjugated diolefins or copolymers of one or more alkenyl aromatic hydrocarbon monomers and one or more conjugated diolefins. However in US '667 only examples are described of branched polymers with polyisoprene arms.

The method to prepare the polymer arms in such a branched polymer is via a living polymerization technique. After the polymer arms are prepared they have to be coupled with a suitable coupling agent upon which a star-shaped polymer is formed. The complete synthesis of the asymmetrical radial polymers has to be performed in one "termination" free reactor, because of the "living" character of the synthesis. Afterwards the star-shaped polymer is generally hydrogenated selectively so as to hydrogenate at least 90 % of the ethylenic unsaturation initially contained therein. This hydrogenation is necessary in order to prevent the star polymer from oxidative and/or thermal degradation phenomena which can cause gel problems. Because of the necessity of the hydrogenation the polymers are costly. Another disadvantage of this type of polymers is the limiting choice of starting materials.

The object of this invention is to offer branched polymers with a narrow and controlable molecular weight distribution. An advantage of these polymers is that the polymers have a reduced tendency for the formation of gels and that they can be prepared in a cost-effective way and where the choice in starting materials varies widely. Another advantage is that the synthesis of the arms can be done completely separate from the synthesis of the branched polymer.

Another object of this invention is to offer a process for the preparation of these branched polymers and a process for the preparation of the polyolefin arms.

The object is reached by offering a new branched polymer in the form of a comb, star, nanogel or any structural combination thereof comprising a plurality of polyolefin arms selected from the group comprising polymers of 1-alkenes or combinations thereof linked to a polymeric backbone, said backbone having repeating units containing a group selected from the group consisting of aliphatic groups, aromatic groups, heteroatom containing groups and combinations thereof and wherein the polyolefin pre-arms have a polydispersity equal to or less than 1.8.

Here and hereinafter with polyolefin arm is meant the polyolefin polymer that is already coupled to the polymeric backbone. With "pre-arm" is meant the polyolefin polymer before it is coupled to the polymeric backbone.

The concepts of the present invention use as the backbone a polymeric structure to which polyolefin arms are linked. Through the use of a polymeric backbone, it is possible to obtain branched polymeric structures in which a relatively high number of branches or arms can be provided on the polymeric backbone. The choice of the specific reactive polymeric backbone and/or its manner of preparation controls the branched structure as to comb, star, nanogel or structural combinations thereof. That allows for the preparation of branched polymers having relatively low viscosities compared to their linear counterparts at the same absolute molecular weight.

Concepts of the present invention rely on chemical reactions resulting in the coupling or linking of a polymeric backbone and polyolefin pre-arms into combs, stars, nanogels or structural combinations thereof. Branched polymers of the present invention result from either a coupling reaction between a reactive polymeric backbone containing functionality which is either (a) capable of directly reacting with unsaturation contained in a polyolefin pre-arm or (b) capable of undergoing coupling reactions with polyolefins that have been derivatized for a compatible reaction with the functional group on the reactive polymeric backbone. The reactive polymeric backbone provides a large number of coupling sites by which a large number of polyolefin pre-arms can be linked to the reactive polymeric backbone to thus enable control of both the extent of branching and the type of branched structure.

Branched polymers of the present invention have polyolefin arms or branches comprised of polymers of 1-alkenes, and preferably predominantly ethylene and/or other 1-alkenes with 3 to 20 carbon atoms. By the term "polyolefin pre-arm" is meant a polyolefin polymer derivatized, preferably at its terminus, so that it can react with a reactive polymeric backbone or a difunctional polymerizable monomer. Derivatized as used herein likewise includes polyolefin polymers having (terminal) unsaturation, that is, the polymer contains a carbon-to-carbon double bound, C = C.

In the preferred practice of the present invention, the polyolefin pre-arm contains, prior to derivatization or coupling with a reactive polymeric backbone or a difunctional polymerizable monomer, terminal unsaturation. That unsaturation is either vinyl, vinylidene, vinylene unsaturation or combinations thereof. Terminal unsaturation is favourable in order to reduce the steric effects resulting from reaction between two polymeric molecules. Wherever in the following the text refers to "terminal", the same teaching holds for polyolefin pre-arms, which have a functionality in a monomeric or polymeric side chain.

The polyolefin pre-arms which can be used in the practice of the present invention depend in large measure on the properties desired in the branched polymer. Use can be made of polyolefin homopolymers, for example polyethylene and polypropylene, but it is also possible, and sometimes preferred, to employ copolymers of one or more 1-alkenes or to employ copolymers of one or more 1-alkenes with other unsaturated monomers copolymerizable therewith. In general, use is made of polyolefin pre-arms formed by copolymerization of ethylene with at least one other 1-alkene. In addition, it is also possible to use, in combination with one or more of the monomers described above, one or more polyenes which either may or may not be functionalized. Also suitable as comonomers in the formation of the polyolefin pre-arms are functionalized ethylenically unsaturated monomers in which the functional group may be one or more polar groups capable of undergoing metallocene catalyzed polymerization.

The polyolefin pre-arms used in the practice of the present invention refer to and include polymers of 1-alkenes generally, and preferably ethylene/propylene copolymers or copolymers of ethylene and propylene with other 1-alkenes, as well as copolymers formed by the interpolymerization of ethylene, 1-alkenes and at least one other polyene monomer. Such polymers are themselves well known to those skilled in the art and are typically prepared by using conventional Ziegler or metallocene polymerization techniques well known to those skilled in the art. Both types of polymers hereinafter collectively are referred to as EP(D)M.

As will be appreciated by those skilled in the art, while propylene is a preferred monomer for copolymerization with ethylene and optionally a diene monomer, it will be understood that in place of propylene, use can be made of other 1-alkenes containing 4 to 20 carbon atoms. The use of such higher 1-alkenes together with or in place of propylene are well known to those skilled in the art and include, particularly, 1-butene, 1-pentene, 1-hexene and 1-octene.

When using an interpolymer of ethylene, 1-alkene and a polyene monomer, use can be made of a variety of polyene monomers known to those skilled in the art containing two or more carbon-to-carbon double bonds containing 4 to 20 carbon atoms, including non-cyclic polyene monomers, monocyclic polyene monomers and polycyclic polyene monomers. Representatives of such compounds include 1,4-hexadiene, dicyclopentadiene, bicyclo(2,2,1)hepta-2,5-diene, commonly known as norbornadiene, as well as the alkenyl norbornenes therein the alkenyl group contains 1 to 20 carbon atoms and preferably 1 to 12 carbon atoms. Examples of some of the latter compounds include 5-methylene-2-norbornene, 5-ethylidene-2-norbornene, vinyl norbornene as well as alkyl norbornadienes.

As known to those skilled in the art, it is also possible to include with certain Ziegler-Natta catalyst systems, as a comonomer in the polymerization of the polyolefin pre-arm, a small amount, typically up to 10 percent, of a functional ethylenically unsaturated monomer. Such monomers typically contain 2 to 20 carbon atoms and contain an ethylenically unsaturated group. Preferred functional ethylenically unsaturated monomers include acrylate and methacrylate esters wherein the ester rest group is C₁ to C₂₀ alkyl or C₆ to C₂₅ aryl including substituted aryl, vinyl amines, vinylcyano compounds and vinyl esters. Representative of suitable functional monomers which can be used in the practice of the present invention include methyl methacrylate, methyl acrylate, N-vinyl amine, N-vinyl pyridine, acrylonitrile, vinyl acetate, etc.

In a particular practice of the present invention, the polyolefin pre-arm is produced using metallocene catalysts. As used herein, the term "metallocene catalyst system" refers to and includes the use of a transition metal compound comprising a metal from groups 3-6 of the Periodic Table, such as titanium, zirconium, chromium, hafnium, yttrium containing at least one coordinating ligand that is a highly conjugated organic compound (e.g., cyclopentadienyl or indenyl). Such catalyst systems are themselves known and are described in the following published applications, the disclosures of which are incorporated herein by reference: EP-A-347,129; EP-A-69,951; EP-A-468,537; EP-A-500,944; PCT/NL/93/00229 and WO 96/13529. Also the process as disclosed in WO 96/23010 is suitable. In addition, other Ziegler catalyst systems likewise known in the art as producing terminal unsaturation can likewise be used in the practice of this invention. One such example is titanium chloride supported on magnesium chloride and used in high temperature (greater than 100°C) polymerization systems. Another example is the copolymerization of ethylene with higher 1-alkenes using VOCl₃ and diethylaluminum chloride. In general, the choice of catalyst system and polymerization conditions will depend on the specific type of polyolefin pre-arm desired, as known to those skilled in the art of Ziegler-Natta polymerization technology. Thus, the composition of the arms are dependent on the limits of Ziegler-Natta polymerization technology and can be controlled independent of the composition of the backbone.

Polyolefin pre-arms can be derivatized for reaction with a reactive polymeric backbone or a difunctional monomer by many types of chemical reactions. Convenient examples of functional groups present or introduced into the polyolefin pre-arm to effect coupling include, but are not limited to carbon-to-carbon unsaturation in the form of vinyl, vinylidene and vinylene bonds, hydroxy, amino, peroxy, carboxylic acid, ester, halide, anhydride, organoboron, cyano, isocyanato, carbon-carbon unsaturation that is polymerizable, thio, epoxy or aldehyde. Such derivatization methods will be presented in more detail as specific embodiments are defined.

Use of a polyolefin pre-arm allows for control of the polyolefin composition independently of the reaction to form the branched polyolefin.

Because the concepts of the present invention make it possible to introduce in a controlling fashion large numbers of polyolefin arms, the properties of the polyolefin arms linked to the polymeric backbone dominate the properties of the resulting branched polymer. Thus, the molecular weight of the polyolefin pre-arms can be varied to control the properties desired in the overall branched polymer. Similarly, the method of preparation of the pre-arms can be used to, in part, control the properties of the arms. In general, the lengths of the arms, expressed as the number-average molecular weight, Mₙ, can be varied within broad limits, depending on the properties desired. As a general rule, use is made of polymer pre-arms having a Mₙ between 300 and 100,000 g/mol, and preferably between 1,000 and 80,000 g/mol. It is generally preferred that the polydispersity of the pre-arms is at least 1.2. With polydispersity (PD) is here and hereinafter meant the ratio between the weight-average molecular weight (M_{w}) and the number-average molecular weight (Mₙ), as determined from the molecular weight distribution (MWD) obtained by size exclusion chromatograph-differential viscometry (SEC-DV). More preferred pre-arms used in the practice of the present invention have a PD of at least 1.2 ranging up to 1.5. Most preferred pre-arms have a PD of at least 1.2 and at most 1.3.

The desired PD of a polyolefin pre-arm can be obtained, starting from an initial polyolefin pre-arm with a higher PD, by subjecting the initial pre-arms to a shearing-process. The initial pre-arm undergoes during this shearing-process mechanical scission by reason of shearing supplied to the pre-arm. Scission results in a reduction in the molecular weight and the polydispersity. As a result of scission it is possible that the number of sheared polyolefin pre-arms with functional groups is reduced. In this case not all newly formed molecules will be able to react with the reactive polymeric backbone.

The shearing process can for example be carried out in a homogenizer or in known types of processing equipment that have the capability of effecting mechanical work on the initial polyolefin pre-arm so that reduction in the molecular weight and polydispersity to the desired level is effected. If necessary this can be performed at elevated temperatures. The conditions f.e. of temperature, pressure and feed rate, are determined, in part, by the molecular weight reductions desired as well as the process time desired, given the processing economics.

The shearing process can for example also be carried out in a so-called SSI (Shear Stability Index) test equipment, as described in ASTM D 3945 A/B. In such an experiment a solution of the initial polyolefin pre-arm that has to be treated, that is: that has to be reduced in molecular weight and polydispersity, is pumped at high pressure through a nozzle using a Diesel injection pump. After the shearing-process the molecular weight distribution is narrowed and the polydispersity is reduced. A possible explanation for this phenomenon, which however is not meant to limit the scope of the invention, is the following. At a choosen shear condition (nozzle geometry, solvent, temperature and pressure) molecules are subjected to shear and will stretch. Just in the middle of the molecule the tension reaches the highest value. Above a certain molar mass the tension on the central bond will be higher than the chemical bond strength and the molecule will break. This process continues time after time until the molar mass of the broken molecules is lower than the molar mass of a molecule in which the tension on the central bond equals the chemical bond strength. The molar mass, where tension equals the bond strength and where as a result no scission occurs anymore, is here and hereinafter defined as the "cut-off molar mass", M_{cut-off}. As a result of this phenomenon, a polymer that has a molecular weight distribution that lies (much) lower than the cut-off molecular weight (M_{cut-off}) will not be reduced in polydispersity through a shearing process. The position of the initial molecular weight distribution (that means the molecular weight distribution of the polymer before the polymer is subjected to the shearing-process) is not only relevant whether or not a result can be obtained by shearing, but also for the amount of reduction in the polydispersity that can be obtained. A polymer A with an initial molecular weight (distribution) that lies lower than the initial molecular weight (distribution) of polymer B will, given a certain set of parameters for the shearing-process, experience a smaller reduction in polydispersity than polymer B. Whether the molecular weight (distribution) of polymer A lies lower than the molecular weight (distribution) of polymer B can, and will in the following part of the description, be determined by the position of the value of M_{w} in the SEC-DV curve. In the case that M_{w} of polymer A is lower than M_{w} for polymer B, the molecular weight distribution of A is regarded to lie lower than the molecular weight distribution of polymer B. As a quantity describing the position of the molecular weight distribution versus the M_{cut-off}, the ratio of M_{w}/M_{cut-off} is taken. In the case of the polymer A and B described above, the ratio M_{w}/M_{cut-off} is lower for polymer A than for polymer B and as a result the reduction in polydispersity for polymer A is lower than the reduction for polymer B. The ratio M_{w}/M_{cut-off} has been found to be a good parameter to describe the shearing-process.

The value for M_{cut-off} can be tuned by changing for example the solvent viscosity, temperature or applied pressure or any combination thereof. An increase in the viscosity of the polymer solvent results, when keeping all the other factors constant, in a lower value for M_{cut-off}. As a result of degradation of the molecules with a molecular weight higher than M_{cut-off} to molecules with a lower molecular weight, the MWD is narrowed and the polydispersity is reduced by increasing the viscosity. The viscosity of the solvent for the polymer can for example be tuned by varying the ratio between two (or more) components that together make up the solvent for the polymer.

The lower the M_{cut-off} is chosen, the narrower will the molecular weight distribution be after the shearing-process for an initial molecular weight distribution.

The result of the shearing-process also depends on the number of times that the polymer has undergone the shearing, the so-called number of cycles. An increase in the number of cycles results, when keeping all the other factors constant, in a decrease in the number of molecules with molecular weight larger than M_{cut-off}. The decrease can however not go on unendlessly. At a certain stage all molecules with molecular weight above M_{cut-off} are degraded. The limiting value is determined by M_{cut-off}. This value can theoretically be determined by executing the shearing process infinitely. Practically this value can, within the borders of certainty, be determined by repeating the shearing-process for 30 times (30 cycles). Thus, the term M_{cut-off} is defined as the molecular weight at 95% of the cumulative weight distribution of a sheared sample after 30 cycles.

A certain desired polydispersity can be obtained also by combining various variables. For example increasing the solvent viscosity decreases the number of cycles in order to obtain a given polydispersity.

The molecular weight distribution (and as a consequence the polydispersity) of the polymer after the shearing-process can be determined by separating the polymer from the solvent(s) that is (are) used during the process. The best method for recovery depends on the combination of polymer and solvent used. The skilled man in the art knows what procedure can best be followed. For example, a sheared ethylene-propylene copolymer can be separated from the solvent by dissolution in tetrahydrofuran (THF) and subsequentially precipitation in acetone. The precipitated (co)polymer can be filtered off and the molecular weight distribution can be determined in the same way as the untreated polymer.

In the following parts of the description, when the term "polyolefin pre-arm" is used it is the polymer pre-arm after that it is subjected to the shearing-process. As a result the polymer pre-arm in the following part of the description has a reduced polydispersity compared to the initial polymer pre-arm. With the term "initial polymer pre-arm" is meant the polymer pre-arm before it is subjected to the shearing-process.

Reactive polymers useful as backbones are preformed polymers with a known or selectable number of functional groups or chemically reactive sites that can be used to couple with the polyolefin pre-arm. Alternatively, the backbone is formed by a polymerization reaction using a polyolefin pre-arm first derivatized with a difunctional polymerizable monomer, either alone or in combination with another monomer copolymerizable therewith. Selective use of the reactive polymeric backbone allows one to control the distribution of the polyolefin arms, thus controlling the degree of branching (number of arms) and the type of branchings that is, comb, star, nanogel or combinations thereof.

Use of a preformed reactive polymer as the backbone generally leads to a branched structure characterizable basically as a comb or star, depending to a significant degree on the molecular weight of the reactive polymeric backbone and the polyolefin pre-arms. Star branched polymers are those wherein the backbone exists as a radial core having attached to it the polyolefin arms. Examples of reactive polymeric backbones that will generate a star structure are dendrimers and extended isocyanates or alternatively any backbone with a radial branched structure. Comb branched polymers are those wherein the polymeric backbone is essentially linear and the polyolefin arms extend pendant from that linear backbone. Thus, polyhydrosilanes, polymethacrylates, and ethylene copolymers are typical examples of reactive polymeric backbones that will provide a comb structure. Incorporation of a crosslinkable monomer during the coupling reaction can lead to a crosslinking of the comb or star structures via residual functionality on the backbone, thus generating a nanogel structure. The nanogel structure thus exists as a crosslinked core (crosslinkable monomer and backbone) with polyolefin arms attached to the core. Crosslink centers and thus a nanogel structure also result from reactions between a functionality internal to the polyolefin arms and a crosslinkable monomer. Regardless of preparation technique, the nanogel structure will function as a star branched polymer. For that purpose, use can be made of conventional crosslinking agents well known to those skilled in the art, including such crosslinking agents as non-conjugated, unsaturated polyenes like 1,7-octadiene, ethylidene norbornene, divinyl benzene, divinyl silane, tri- and tetravinyl silanes, trialkoxysilanes, trihalosilanes, alkoxyhalosilanes, α,ω-diamino alkenes , α,ω-dicarboxy alkenes and 7-methyl-1,6-octadieen.

Reactive polymer structures useful as back-bones in the practice of this invention are very broad. Examples include, but are not limited to the following classes: homo- and copolymers of polyhydrosilanes, polyacrylic and methacrylic acids, polyacrylates, polymethacrylates, polyvinyl alcohol, polyvinyl acetate, poly(vinyl acetals), poly(vinyl ketals), ethylene copolymers with ethylenically unsaturated carboxylic acids, esters, or anhydrides, styrene copolymers with ethylenically unsaturated carboxylic acids, esters, or anhydrides, dendrimers, polythiols, polyepoxides, poly- or extended isocyanates.

In an alternative embodiment, the polymeric backbone is directly formed via a polymerization reaction (if desired in the presence of polymerizable monomers) of polyolefin pre-arms. Those pre-arms have been first derivatized with a difunctional polymerizable monomer leaving a polymerizable group capable of undergoing such polymerization reactions. Branched polymers thus formed will generally have comb structures. However, when the polyolefin pre-arms have a high molecular weight compared to the molecular weight of the backbone achieved during polymerization of the pre-arms, the arms will fold to provide a physical star. In the event the polymerization reaction is carried out in the presence of a crosslinkable monomer a nanogel type structure will be formed. Thus, nanogel-type structures or a mixture of comb, star and nanogel will originate when combs and/or stars are further randomly branched by introduction of a crosslinkable monomer during preparation of the backbone.

The difunctional polymerizable monomer as used herein is a monomer possessing functionality that can selectively react with the terminal unsaturation or other terminal functionality of the polyolefin pre-arm, and possess other secondary functionality, reactive via a standard polymerization techniques such as cationic, anionic, free radical, Ziegler-Natta, etc., as a secondary reaction. Difunctional polymerizable monomers can be selected from the group comprising hydroalkoxysilanes, hydrohalosilanes, acrylic or methacrylic acids, their esters, amides, acid halides or anhydrides, vinyl acetate, vinyl alcohols, vinyl amines, vinylcyano compounds, vinyl isocyanates, vinyl thiols, vinyl epoxy compounds, etc.

One suitable class of reactive polymeric backbones used in the practice of the present invention are polyhydrosilane polymers and copolymers containing a large number of repeating units containing a silicon-hydrogen bond. In general, it is preferred to use silicon-containing polymers having repeating units of the general formula: 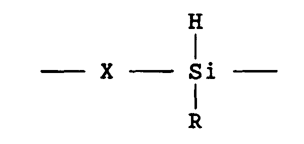 wherein X is a group containing a heteroatom, such as O, S, N, Si or one or more carbon atoms either as part of an aliphatic or aromatic group and R is hydrogen or an organic group, and preferably hydrogen, alkyl, aryl, cycloalkyl, alkoxy, aryloxy or cycloalkoxy.

Illustrative are polyhydrosiloxanes derived from an alkylhydrosiloxane end-capped with either a hydrosilane functionality or an alkylsilane functionality. Such polyhydrosiloxanes have the general formula: 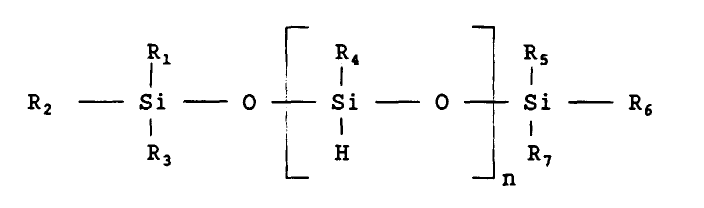 wherein R₁ to R₇ is each independently hydrogen or an organic group; preferably, R₁, R₂ and R₃ can be either hydrogen, alkyl, aryl, cycloalkyl, alkoxy, aryloxy or cycloalkoxy; R₄ is hydrogen, alkyl, aryl, cycloalkyl, alkoxy, aryloxy or cycloalkoxy; R₅ and R₆ are alkyl, aryl, cycloalkyl, alkoxy, aryloxy or cycloalkoxy and R₇ is hydrogen, alkyl, aryl, cycloalkyl, alkoxy, aryloxy or cycloalkoxy; n is an integer having a minimum value of about 10, and preferably 25 or higher. Such polyhydrosiloxanes, as is well-known to those skilled in the art, are commonly available from a number of companies including Dow Corning and Rhone Poulenc.

As will also be appreciated by those skilled in the art, it is also possible to use, as the reactive polymeric backbone, siloxane copolymers containing 10 or more and typically 10 to 80 silicon-hydrogen groups as repeating units. As will also be appreciated by those skilled in the art, it is likewise possible to employ in place of the polyhydrosiloxanes described above, the corresponding analogs thereof in which the oxygen atom is, at least partially, replaced by sulfur or nitrogen atoms.

Representative of suitable polyhydrosilane polymers are polymethylhydrosilane (PHMS), polymethylhydrosiloxane, methylhydrodimethylsiloxane copolymer, methylhydrophenyl-methylsiloxane copolymer, methylhydrocyanopropylsiloxane copolymer, methylhydromethyloctylsiloxane copolymer, poly(1,2-dimethylhydrosilazane), (1-methylhydrosilazane)(1,2-dimethylsilazane) copolymer and methylhydrocyclosiloxane polymer (a cyclic reactive polymeric backbone).

In general, use is made of silicon-containing polymer backbone having a number average molecular weight of 300 g/mol or higher, and preferably 300 to 10,000 g/mol.

In accordance with a preferred embodiment of the invention, the pre-arms can be linked to the silicon-containing reactive polymeric backbone described above by reacting its (terminal) unsaturation with the Si-H bond present in repeating units in the polyhydrosilane backbone. As is well known to those skilled in the art, the reaction between the (terminal) unsaturation of the pre-arms and the Si-H bond of the polyhydrosilane can be carried out under conditions of heat. It is generally preferred to carry out the reaction (hydrosilylation) under the influence of a suitable catalyst to effect addition of the silicon hydride to the (terminal) unsaturation of the olefin pre-arm to link the arm to the silicon-containing reactive polymeric backbone. Suitable hydrosilylation catalysts to effect that reaction are known in the art and include metals from groups 8 to 10 of the Periodic Table of the Elements, (see Handbook of Chemistry and Physics 70th edition, CRC press, 1989-90), including catalysts based on palladium, platinum or nickel. Catalysts which have been found to be particularly effective are H₂PtCl₆·xH₂O(x≥O), K[Pt(C₂H₄)Cl₃], RhCl(PPh₃)₃ or Co₂(CO)₈. Such catalysts and their use are described in the literature such as Lukevics et al. in J. Organomet. Chem. Lib. 1977, 5, pages 1-80. Preference is given to Pt-containing catalysts. Such catalysts are described in USP 5,486,637.

As will be appreciated by those skilled in the art, the foregoing reaction generates a mixture of products, depending on the structure of the reactive polymer backbone and the structure of the polyolefin pre-arm. Nonetheless, one of the principal reactions which proceeds is the addition of the hydrosilane group to the (terminal) unsaturation of the polyolefin pre-arm. For example, those pre-arms containing terminal vinylidene unsaturation react according to the following equation: 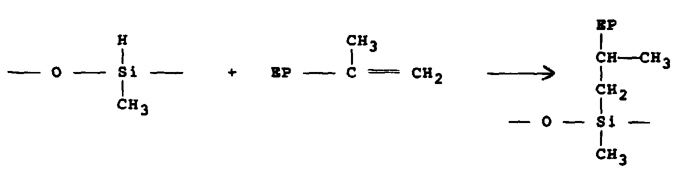 while the reaction with a terminal vinyl unsaturation proceeds according to the following equation: 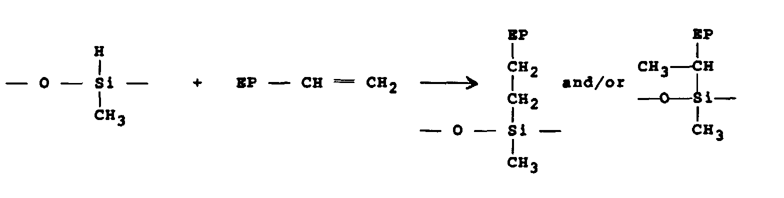 wherein EP represents the remainder of the polyolefin pre-arm.

In accordance with one variation on this embodiment of the invention, it is also possible to produce polymers of the same type by a different route in which the polyolefin pre-arm is reacted with a difunctional polymerizable monomer in the form of a monomeric hydrosilane compound containing a Si-H group, which is then either homopolymerized or copolymerized with other silicon-containing compounds in a conventional manner. This concept of the invention thus involves the coupling of a polyolefin pre-arm with a monomeric hydrosilane having the structure: 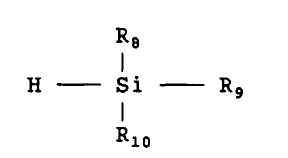 wherein R₈ and R₉ are each a hydrolyzable group such as a halogen atom and preferably chlorine or a lower alkoxy group containing 1 to 6 carbon atoms and R₁₀ is a hydrolyzable group as described above or hydrogen, alkyl, aryl or cycloalkyl.

Thus, the reaction, when the polyolefin pre-arm contains vinylidene terminal unsaturation, proceeds as follows: 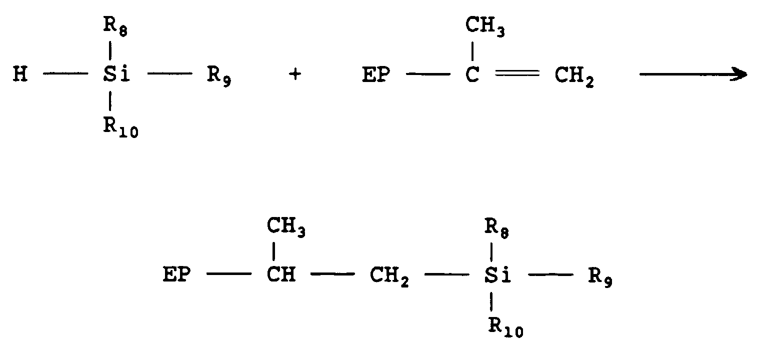 The resulting polyolefin-terminated silane can then be reacted, typically in the presence of water, to homopolymerize the silane and form the corresponding branched polymer containing polyolefin arms and a silane polymer backbone. It should be understood, however, that it is possible, and sometimes desirable, to utilize silanes different from that with which the polyolefin pre-arm is coupled which then can be copolymerized to form a polysilane backbone structure, having a random distribution of polyolefin arms emanating therefrom.

Optionally, if a nanogel type of branched polyolefin is desired, one would add to the reaction sequence just described a small amount of a crosslinking monomer in the form of a trialkoxysilane, a trihalosilane, an alkoxyhalosilane multi-functional silylamines and amides, etc. so that the heteroatoms of one monomer react with the heteroatom attached to -Si- of another monomer to form a hydrophilic core of Si-heteroatom groups with polyolefin arms attached thereto. As will be appreciated by those skilled in the art, the terminally unsaturated polyolefin pre-arm can be reacted directly with the crosslinking monomer in the presence of water to form a nanogel branched polymer.

It is also possible to copolymerize, with the polyolefin-substituted silane, other hydrolyzable silanes to form a silane copolymer backbone, the units of which contain polyolefin arms emanating therefrom along with repeating units from the other hydrolyzable silanes which have been copolymerized therewith. For example, it is possible to copolymerize a polyolefin-substituted silane illustrated above with, for example, dimethyldichlorosilane in which some of the repeating units of the polymer backbone contain polyolefin arms emanating therefrom while others derived from the dimethyldichlorosilane contain methyl groups appended to the silicon atom.

The conditions under which the polyolefin pre-arm is reacted with the hydrosilane monomer are like those described above for reaction between the polyolefin pre-arm and the polyhydrosilane.

In accordance with another concept of the present invention, it is possible to utilize other chemical reactions or coupling techniques to link the polyolefin pre-arm to a reactive polymer backbone. In accordance with one embodiment, it is possible to employ, as the reactive polymeric backbone, polymers of acrylic and methacrylic acid either as a homopolymer or copolymerized with other acrylic and/or methacrylic type monomers. The acrylic and methacrylic polymers used in this embodiment of the invention are those derived from the monomeric unit having the structure: 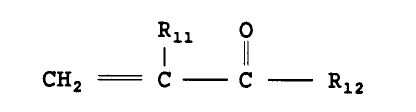 wherein R₁₁ is either hydrogen or lower alkyl (C₁-C₁₂, e.g., methyl) and R₁₂ is an OH group, a halogen group and preferably chlorine, an alkoxy group, or an aryloxy group. Representative of such compounds include acrylic acid, methacrylic acid, acrylyl chloride and methacrylyl chloride along with various esters of either acrylic or methacrylic acid including the alkyl and aryl ester derivatives of the two acids. As a comonomer, use can be made of amino or hydroxyalkyl acrylates and methacrylates. It is sometimes desirable to employ, when using the ester, an ester leaving group to facilitate transesterification with a functionalized polyolefin pre-arm as will be described more fully hereinafter. Suitable ester-leaving groups are well known to those skilled in the art, and include tosylates and mesylates as examples.

The polyacrylic or polymethacrylic backbone embodied in the practice of the present invention should have a molecular weight sufficient to provide at least 10 and preferably at least 25 acid, acid chloride or ester groups in each backbone polymer chain. Such polymers have molecular weights Mₙ typically ranging from 1,000 to 40,000 g/mol.

The coupling of the polyolefin pre-arm to the acid, acid chloride or ester functionality of the reactive polymeric backbone can be achieved by first functionalizing the polyolefin pre-arm prepared as described above to introduce either a terminal amine group or a terminal hydroxy group, each of which is capable of undergoing reaction with the functional group contained in the polyacrylic or polymethacrylic backbone. Preferably, the hydroxy terminal polyolefin pre-arm is converted to a lithium alkoxide by reaction with n-butyllithium, followed by reaction with acrylyl chloride or methacrylyl chloride.

One such technique for converting the terminal unsaturation of the polyolefin pre-arm to either an amine or a hydroxy compound is by hydroboration. In that technique, a hydroboration reagent is added across the terminal double bond of the polyolefin pre-arm to form an organoborane derivative which can then be converted to the corresponding hydroxy compound using alkaline hydrogen peroxide or to the corresponding amine using ammonium hydroxide/sodium hypochlorite. Those reactions can be illustrated by means of the following equation: 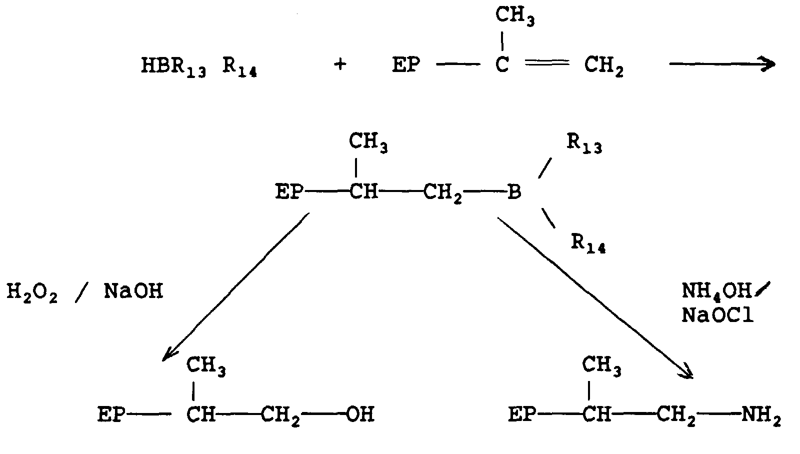 wherein R₁₃ and R₁₄ are each hydrogen and/or organic groups bonded to the boron in the hydroboration reagent. A number of such hydroboration agents are well known to those skilled in the art and can be found and their utility described in H.C. Brown, "Organic Synthesis Via Boranes" Wiley 1975. One such hydroboration reagent which can be effectively used in the practice of the present invention is 9-boronbicyclo-[3.3.1]nonane [9-BBN].

Once converted to the corresponding hydroxy or amine terminated polyolefin pre-arm, this pre-arm can then be reacted with the polyacrylic or polymethacrylic backbone in accordance with conventional techniques by which the functional group of the reactive polymer, a carboxylic acid group, an acid chloride group or an ester group reacts with the polyolefin pre-arm in the form of a hydroxy terminated compound to form the corresponding ester polyolefin arms linked to the acrylic or methacrylic polymer backbone. Similarly, the same functional groups react with an amine terminated polyolefin pre-arm to form the corresponding amide, thereby linking the polyolefin arm to the polymer backbone. Conventional esterification and amidation reaction conditions, generally in solvent, may be used to effect that coupling reaction.

Instead of using, as the polymer backbone, homopolymers of acrylic or methacrylic acid, acid chlorides or esters, use can be made, in accordance with another embodiment of the invention, of copolymers of the foregoing acrylic or methacrylic acids, acid chlorides or acid esters. Such copolymers are formed from one or more polymerizable ethylenically unsaturated monomers capable of undergoing an anionic or free radical polymerization. Preferred among comonomers with such acrylic and methacrylic monomers as described above are ethylene and lower 1-alkene such as propylene and 1-butene, styrene and styrene derivatives such as alpha methylstyrene, vinyl ethers and vinyl cyano compounds such as acrylonitrile and methacrylonitrile. Other comonomers useful in the practice of this invention as copolymerizable with the acrylate and methacrylate monomers include unsaturated diacids, diesters, anhydrides such as fumaric, itaconic, maleic, a broad range of vinyl monomers such as vinyl acetate, vinyl imidizole, vinyl pyridine, methyl vinyl ketone, allyl glycidyl ether, and acrylamide. The amount of one or more of the foregoing comonomers is not critical and can be varied within relatively wide ranges. In general, use can be made of 20 to 80 percent of the acrylic or methacrylic monomer and 80 to 20 percent of one or more of the foregoing comonomers. Once again, it is preferred to employ, as the reactive polymer backbone, copolymers having molecular weights (Mₙ) ranging from 1,000 to 40,000 g/mol.

As will be appreciated by those skilled in the art, the polyolefin pre-arm can be coupled to such copolymers in the same manner as they are coupled to the acrylic and methacrylic homopolymers as described above. In either case, use is made of a molar ratio of the functionalized polyolefin pre-arm to acid, acid chloride or ester functionality or the reactive polymeric backbone to ensure the desired number of arms coupled to the backbone; this ratio is in the range of 1:100 to 10:1.

Branched polymers of the foregoing types can also be prepared by the alternative route in which a terminal amine, hydroxy, or lithium alkoxy functional polyolefin pre-arm is first reacted with a difunctional polymerizable monomer. In this embodiment, it is convenient to use an acrylic or methacrylic monomer to couple the polyolefin pre-arm through either an ester or amide coupling linkage. Once coupling of the polyolefin pre-arm is accomplished, the resulting coupled monomer can then be subjected to conventional free radical or anionic polymerization either alone or in combination with one of the foregoing comonomers to form the corresponding polymers with polyolefin arms emanating from the repeating units derived from the acrylic or methacrylic monomer. Particularly, ethylene glycol dimethacrylate which leads to secondary coupling of the comb structures can be used to give a nanogel type branched polyolefin. Once again, the reaction techniques for effecting that polymerization reaction are conventional and can be found in the literature describing conditions to effect free radical and anionic polymerization of acrylic and methacrylic monomers. See, for example, the Encyclopedia Of Polymer Science & Engineering, (1988), John Wiley & Sons, Inc., Vol. 13, pp. 1702-1867 and Vol. 1, pp. 221-224, 235-251 (Bamford).

In accordance with another embodiment of the invention, use can also be made of a reactive polymer in the form of copolymers of maleic anhydride and ethylene or copolymers of maleic anhydride, ethylene and one or more of a lower alpha-olefins such as propylene and 1-butene or styrene. In accordance with this concept of the invention, use can be made of copolymers containing 85 percent to 95 percent of ethylene and 15 percent to 5 percent of maleic anhydride. The polyolefin pre-arms, which have been functionalized to introduce either a hydroxy or an amine group can thus be coupled to the ethylene/maleic anhydride copolymer by means of ester and/or amide linkages. Alternatively, when using polyolefins functionalized with an amine, it is also possible to couple the polyolefin pre-arm to the ethylene maleic/anhydride copolymer backbone by means of imide linkages. The reaction of an amine-functionalized polyolefin pre-arm with an ethylene/maleic anhydride copolymer to form the corresponding imide may be represented by the following equation: 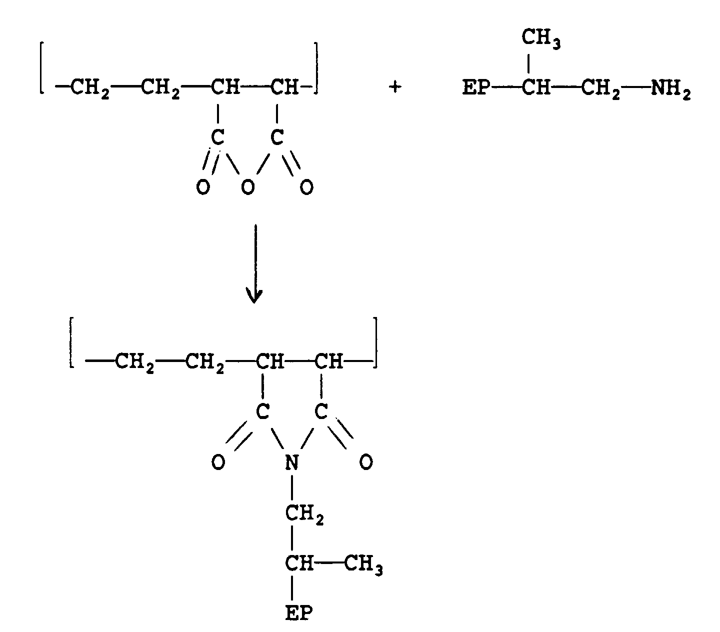 Once again, the reaction conditions for coupling hydroxy or amine functionalized polyolefin pre-arms are conventional.

As an alternative to the ethylene/maleic anhydride copolymers, use can also be made of the styrene/maleic anhydride copolymers, referred to as SMA polymers. Included as SMA polymers are those where the styrene in part may be substituted by other aryl olefins such as α-methyl styrene, vinyl naphthalene, alkyl styrenes, vinyl alkyl naphthalenes, halogen substituted styrenes, etc. In accordance with this concept of the invention, use can be made of copolymers containing 90 to 65 weight percent of styrene and 10 to 35 weight percent of maleic anhydride. Additionally, 5 to 15 weight percent of the maleic anhydride may be prereacted with simple amines such as ammonia, aniline, N-alkyl amines, alkyl substituted anilines to form the corresponding maleimide group in the SMA polymer. The SMA polymers useful in the practice of this invention can have a Mₙ of 500 to 55,000 g/mol. Polyolefin pre-arms, which have been functionalized to introduce a terminal hydroxy or amine group, can thus be coupled to the SMA polymers through coupling with the maleic anhydride groups to form an ester, amide, or imide linkage as described previously for the ethylene/maleic anhydride backbone.

Branched polymers similar to those just described can be prepared by use of α,β-unsaturated anhydrides such as maleic anhydride as a difunctional polymerizable monomer for reaction with amine or hydroxy terminal polyolefin pre-arms. The amine or hydroxy groups reacts to provide new unsaturated polyolefin pre-arms with either an imide or an anhydride, ester bond. The unsaturation in the new pre-arm can be subjected to conventional free radical or anionic polymerization conditions either alone or with ethylene or styrene, to make copolymer backbones. Alternatively, other monomers copolymerizable with ethylene and/or styrene, for example acrylates and methacrylates, can be used to make a terpolymer backbone.

In accordance with a further embodiment of the invention, it is possible, and sometimes desirable to use, as the reactive polymeric backbone, partially hydrolyzed polymers of vinyl acetate. As is well known to those skilled in the art, vinyl acetate can be polymerized by means of a free radical polymerization mechanism to form polyvinyl acetate which can then be substantially or completely hydrolyzed using either acidic or basic conditions to remove acetyl groups pendant on the reactive polymer backbone leaving pendant hydroxy groups. Typically, polyvinyl acetate can by hydrolyzed to the extent of 50 to 80 percent in the practice of the present invention. Thus, the polymer employed as the reactive polymeric backbone contains 50 to 80 percent alcohol groups and 20 to 50 percent vinyl acetate groups. Such products are commercially available from a variety of sources.

In one variation, the vinyl acetate-vinyl alcohol polymer employed as the reactive polymeric backbone in the practice of the present invention can be converted by reaction with a C₁-C₄ aliphatic aldehyde or ketone to form the corresponding acetal or ketal, respectively. Such reactions and the polymers produced therefrom are well known to those skilled in the art and are commercially available from a variety of sources. Such polymers are referred to as poly(vinyl acetals) or poly(vinyl ketals) and generally contain the structure: 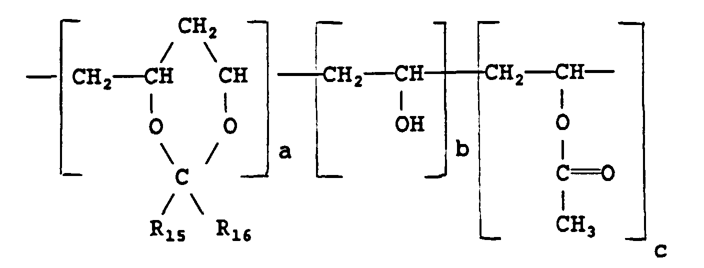 wherein R₁₅ and R₁₆ are each hydrogen or C₁-C₁₀ alkyl (e.g., methyl, ethyl, etc.). Commercially available poly(vinyl acetals) and poly(vinyl ketals) typically contain 75 to 95 percent by weight of the acetal (or ketal) (a), 6 to 25 percent by weight of vinyl alcohol (b) and 0 to 13 percent by weight of vinyl acetate (c). Those proportions are not critical to the practice of the present invention and, as will be appreciated by those skilled in the art, proportions outside those ranges can likewise be employed. While it is not critical to the practice of the invention, it is generally preferred that the reactive polymeric backbone used in this embodiment has a number average molecular weight Mₙ ranging from 1,000 to 40,000 g/mol.

The polyolefin pre-arm herein can be coupled to polyvinyl alcohol/vinyl acetate or to poly(vinyl acetals/ketals) in combination with either the vinyl alcohol group or the vinyl acetate group by means of a variety of techniques. For example, use can be made of a polyolefin pre-arm which has been functionalized to introduce a carboxylic acid group as described above or the acid chloride group. When the polyolefin pre-arm has been functionalized in that way, the carboxyl group is capable of reaction with either the hydroxy functionality of the vinyl alcohol by way of an esterification reaction or with an acetate group of vinyl acetate by way of a transesterification reaction in accordance with conventional techniques.

Alternatively, use can be made of a polyolefin pre-arm which has been functionalized to introduce an ester group, such as a simple aliphatic ester or, as is sometimes preferred, an ester containing an ester leaving group such as a tosylate group or mesylate group. Such ester groups are likewise capable of reaction with either the acetate functionality or the hydroxy functionality of the reactive polymeric backbone, again in accordance with well known techniques.

Another technique by which the polyolefin pre-arm can be coupled to the polyvinyl alcohol/acetate backbone is by a reaction sequence employing a hydroxy functional polyolefin pre-arm. The (terminal) hydroxy group of the polyolefin pre-arm is converted to a tosylate by reactions with tosylchloride to generate a (terminal) tosyl group on the polyolefin pre-arm. That has the capability of reacting directly with the hydroxy functionality of the polyvinyl alcohol/acetate in the backbone to form the corresponding ether linkage or to undergo a transesterification reaction with the acetate group to form the corresponding ester linkage.

In accordance with yet another embodiment of the invention, use can also be made, as the reactive polymeric backbones, of the polymeric structures known in the art as dendrimers. Such dendrimers are described in, for example, USP Nos. 4,587,329 and 4,737,550 and WO93/14147 and WO95/02008, the disclosures of which are incorporated herein by reference. Dendrimers are three-dimensional highly branched polymer molecules comprising a core, and radiating from the core molecule a number of generations or branches. The generations of branches are composed of repeating structural units linked via various functional groups and terminated in the final generation by a functional group.

As is described in the foregoing publications, dendrimers are macromolecules formed with the aid of alternate reaction steps, starting from a core or an initiator core. Typically, the reactions occurring during the synthesis of such dendrimers are virtually selective reactions; that means that no or virtually no undesired side reactions occur.

In the preferred practice of the invention, the core molecule is a molecule which preferably contains two or more functional groups, (that is, it may undergo two or more chemical reactions) and may range as high as ten or more functional groups. The core may be chosen from the group of ammonia, water, methanol, polymethylenediamines, diethylenetriamine, diethylenetetramine, tetraethylenepentamine, linear and branched polyethylene imine, methylamine, hydroxyethylamine, octadecylamine, polyaminoalkylarenes, such as 1,3,5 tris-(aminomethyl)benzene, tris(aminoalkyl)amines, such as tris(aminomethyl)benzene, tris(aminoalkyl)amines, such as tris(aminoethyl)amine, heterocyclic amines, such as imidazolines and piperidines, hydroxyethylaminoethylamine, mercaptoethyl amine, morpholine, piperazine, pentaerythritol, sorbitol, mannitol, duleitol, inositol, polyalkylenepolyols, such as polyethylene glycol and polypropylene glycol, glycols, such as ethylene glycol, 1,2-dimercaptoethane, polyalkylene polymercaptans, phosphine, ε-aminocaproic acid, glycine, thiophenols, phenols, melamine and derivatives thereof, such as melamine tris(hexamethylenediamine). In the process according to the invention, use is preferably made of a core that is chosen from the group comprising polymethylene diamines, glycols and 1,3,5-tris(aminomethyl)benzene (AEB). Polymethylenediamines, that are more preferably used as a core are hexamethylenediamine, ethylenediamine and 1,4-diaminobutane (DAB).

If so desired, it is also possible to use a copolymer containing the above functional groups as a core for the dendritic macromolecule. Examples of such copolymers are styrene-maleimide copolymer, polyethyleneimine and polymers such as polypropylene oxide, polystyrene and ethylene-propylene-diene copolymers that are functionalized with one or more of the above functional groups, such as NH₂ groups.

The core molecule is thereafter reacted with a polyfunctional compound, and preferably a polyfunctional compound which, when reacted with the core molecule, forms a dendrimer having either terminal amine groups, terminal hydroxy groups or other terminal functional groups such as alkylester groups. Thus, the dendrimer generations preferred for use in the practice of the present invention utilize, as the repeating unit, polyether, polyamidoamines, polyethyleneimines or polyalkylene- polyamines. One typical example of a dendrimer is formed with ammonia, as the core molecule. Ammonia is reacted, via a "Michael addition", with an excess of the polyfunctional compound methylacrylate, thus: 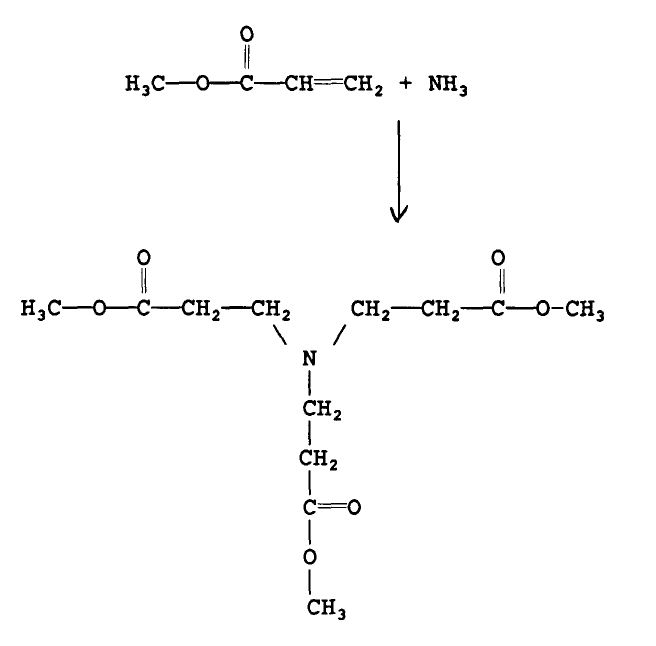 The foregoing structure is then next reacted with a polyfunctional compound such as an alkylenediamine to yield the following structure to form a polyamidoamine, thus: 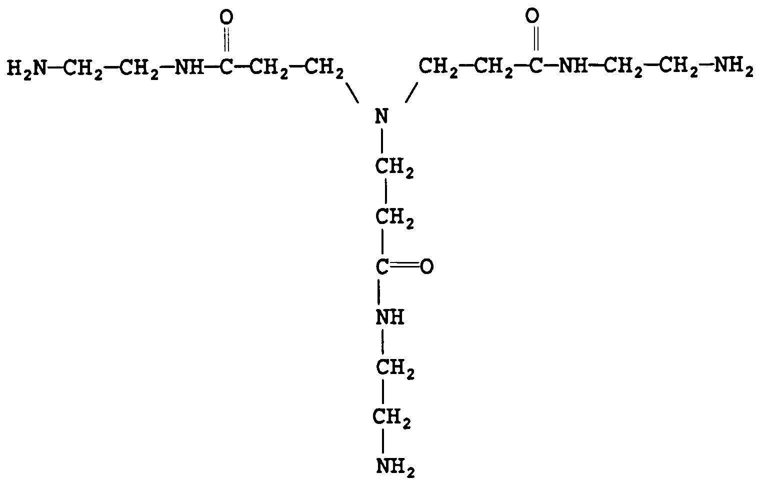 The above reaction sequence represents one generation.

Each generation thereafter is added by alternating reactions of methylacrylate and ethylenediamine. If desired, the polyfunctional compound can be changed at any point in the sequence to vary the structure being produced or alternatively the reaction sequence can be stopped at a half generation.

In general, use is made, as the polyfunctional compound, of a wide variety of compounds capable of reaction with the core in the ordered sequence outlined above. Polyfunctional groups which may be employed in the practice of the present invention are generally known in the prior art. For example, as described in U.S. Patent No. 4,587,329, there is described polyfunctional groups containing functional groups such as amino, nitrile, hydroxy, mercapto, carboxy, carboxyalkyl, amido, halo, urea, oxiranyl, aziridinyl, oxazolinyl, imidazolinyl, sulfanato, phosphonato, isocyanato, isothiocyanato and combinations thereof. Alkylesters of acrylic and methacrylic esters are examples and can be used in combination with alkylenediamines as one example to add each generation to the dendrimer core. Other polyfunctional compounds may likewise be employed as are described in the literature. One example are the vinylcyanides having the structure: 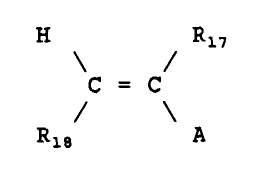 where R₁₇ = H or -CH₃; A = -C≡N; and R₁₈ is hydrogen or a hydrocarbon group with 1 to 8 carbon atoms.

Very suitable vinyl-cyanide units that can be used are acrylonitrile and methacrylonitrile.

As will be appreciated by those skilled in the art, a dendrimer can be produced by reaction of acrylonitrile with as the core 1,4-diaminobutane, according to the following reaction: 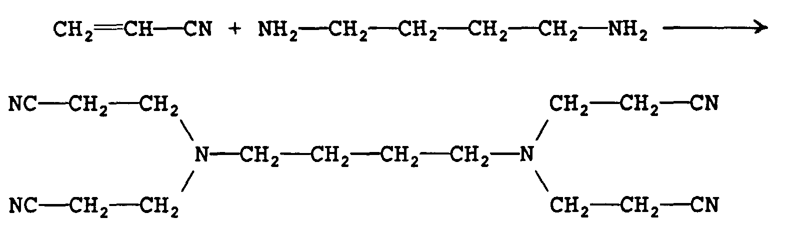 In the above structure, the cyano groups are hydrogenated to the corresponding amine groups to terminate the first generation. These amines are then capable of undergoing further reaction with a polyfunctional monomer, which may be either the same or different from the polyfunctional group used earlier in the sequence. For example, it is possible to react the foregoing amine terminated compound with additional quantities of acrylonitrile, or it is also possible to use a completely different difunctional monomer such as an alkylester or methylacrylate ster as described above. In general, the dendrimers employed in the practice of this invention have number average molecular weights ranging from 300 to 10,000 g/mol, once again, depending in part on the structures desired in the final macromolecule. The number of polyolefin pre-arms coupled to the dendrimer type of backbone will depend on the number of branches or endgroups in the dendrimer molecule. In the practice of this invention, dendrimers of 1 to 5 generations with 4 to 64 branches or end groups can find utility.

A number of different approaches can be taken in preparing dendrimers for use in the present invention. For example, 1,3,5-tris(aminomethyl)benzene can be reacted with acrylonitrile to form, as the second generation dendrimer, a dendrimer containing twelve amino groups:

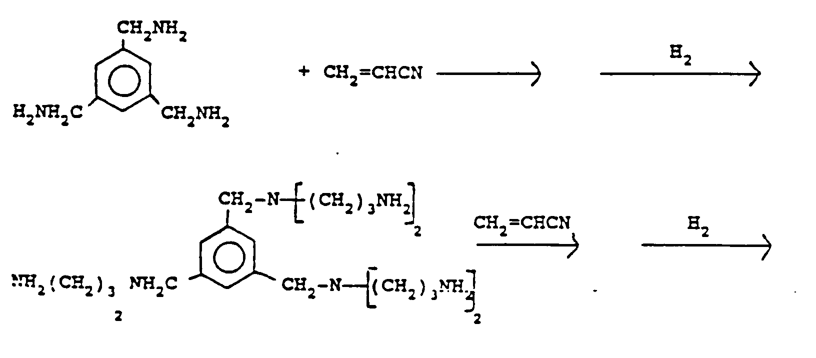

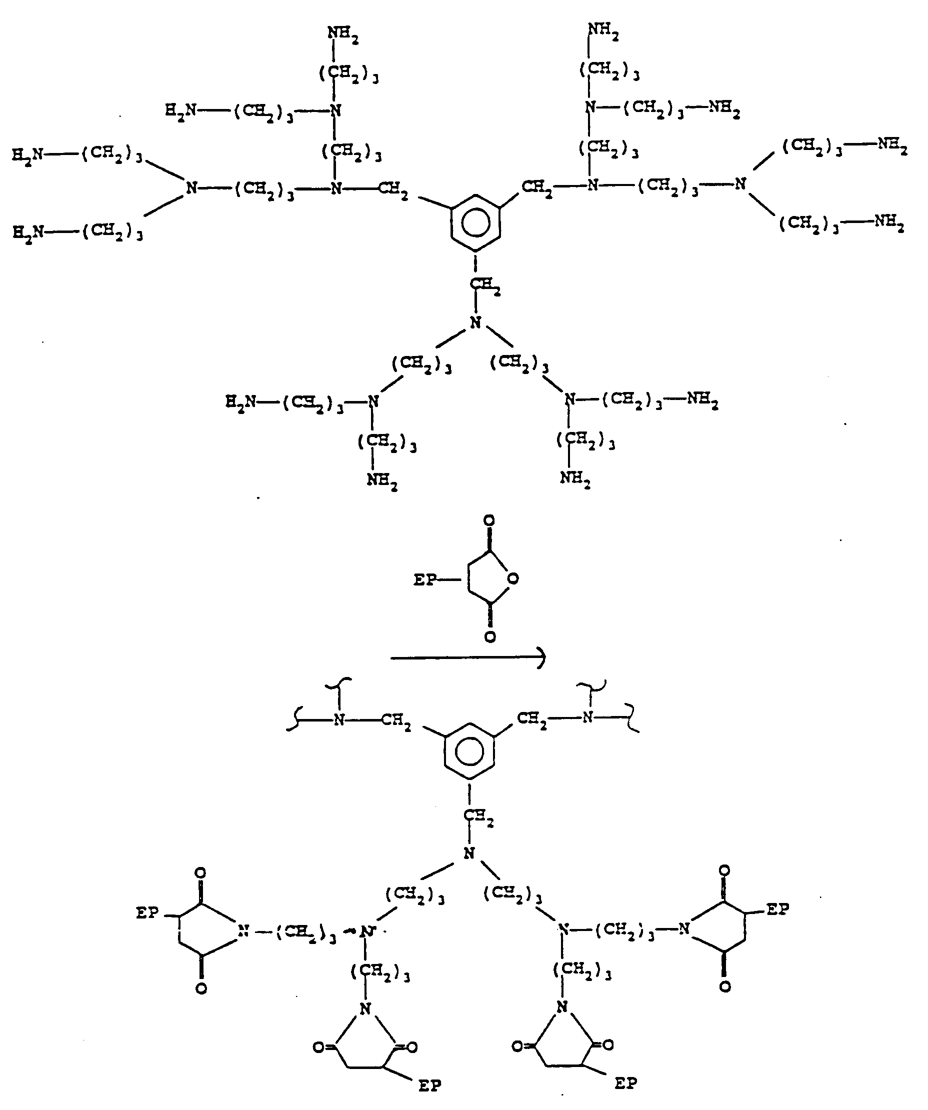

The polyolefin pre-arm can be coupled to the free amine or hydroxy groups of the foregoing dendrimers by first functionalizing the terminally unsaturated polyolefin to provide on the polyolefin a functional group capable of reaction with such amino or hydroxy groups. As is known to those skilled in the art, the polyolefin pre-arm can be functionalized to introduce a carboxylic anhydride group or an acid chloride group, either of which can be reacted with the amino or hydroxy group of the dendrimer to couple the polyolefin arm to the dendrimer to form a highly branched structure. The carboxyl group and/or the acid chloride can be conveniently produced by a number of techniques.

One technique is to carry out a hydroboration reaction and react the organoborane with carbon dioxide to form the corresponding acid group which can then be easily converted to its corresponding acid chloride. Alternatively, as described above, the polyolefin pre-arm can be reacted with maleic anhydride by way of, for example, an ene reaction. Alternatively, it is also possible to convert the polyolefin pre-arm to the corresponding aldehyde by means of a hydroformylation reaction using catalysts derived from cobalt or rhodium well known for that purpose. The aldehyde derivatized polyolefin pre-arm can then be reacted with the dendrimer containing terminal amine groups via a Schiff-base reaction to give an imine bond which alternatively can be hydrogenated for added heat stability or can provide a new double bond for other chemical modifications.

Alternatively, a hydroxy terminal polyolefin pre-arm can be converted to its tosylate by reaction with tosylchloride. The tosylate terminated polyolefin pre-arm can react with either an amine terminal dendrimer to form an amine linkage or with a hydroxy terminated dendrimer to form an ether linkage of the polyolefin pre-arm.

Alternatively, it is also possible to convert the polyolefin pre-arm to the corresponding epoxide which then is capable of reaction with either a free amino group or hydroxy group present in the dendrimer. Epoxidation can likewise be effected using peracid chemistry which is well known to those skilled in the art.

In each case, the derivatized polyolefin pre-arm is capable of reaction with the hydroxy or amino groups of the dendrimer backbone to form a highly branched polymer having the dendrimer as the core or backbone with polyolefin arms extending therefrom. Highly branched polymers of the same general type can also be prepared by extending the amine or hydroxy terminal group present in the dendrimer backbone with a molecule containing an isocyanate or isothiocyanate group. The free isocyanate or isothiocyanate group thus present in the new dendrimer backbone can be reacted with the polyolefin pre-arm which has been derivatized as described above to introduce either hydroxyl termination or amine termination, introduced in the polyolefin pre-arm by way of the hydroboration reaction described above. These branched polymers have polyolefin arms coupled to the dendrimer backbone via the very thermally stable urethane or urea linkage. That series of reactions can be illustrated for a selectively blocked multifunctional isocyanate by way of the following equations: 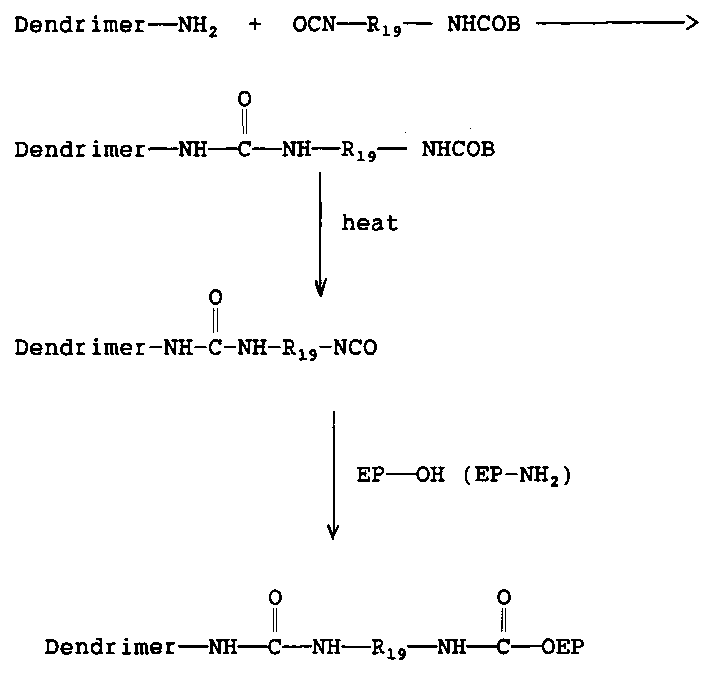 The group -NHCOB- in the above reaction sequence represents a blocked isocyanate function and R₁₉ is the remainder of the isocyanate and, preferably, is an alkyl, aryl, cycloalkyl or alkylary group. The blocking molecule can be any of a variety of molecules with an active hydrogen. The blocking molecule can be removed thermally in a subsequent reaction at generally 150°C-250°C. Typical blocking molecules are phenol, ketoximes, such as methylethyl ketoxime, secondary alcohols such as 2-ethyl hexanol, caprolactam. Reaction conditions to effect blocking and deblocking are well-known in the art.

As an alternate approach to the use of selectively blocked diisocyanates use can be made of vinyl isocyanates such as isocyanatoethyl methacrylates (IEM) or m-isopropenyl α,α-dimethyl benzyl isocyanate (TMI). The isocyanate functionality of the IEM or TMI is preferrably blocked then incorporated into the dendrimer molecule by way of the conventional Michael reaction with an amine terminal dendrimer. As described previously, the isocyanate function is then regenerated by subjecting the dendrimer to heat to effect deblocking and then reacted with an amine or hydroxy terminal polyolefin pre-arm as illustrated in the following equations: 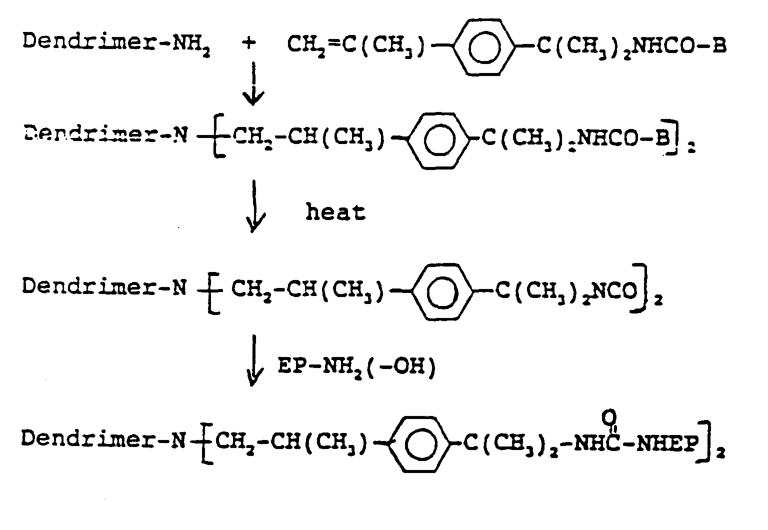 The number of polyolefin arms possible in the above type of branched polymers is generally two times the number of amine terminal branches in the starting dendrimer and typically selection is made of dendrimers with 4 to 16 amine terminal branches.

Alternatively, the polyolefin pre-arm which has been derivatized to introduce to it either a hydroxy or an amine terminal group can be reacted with a selectively blocked multi-functional isocyanate or isothiocyanate. This so-obtained derivatized polyolefin pre-arm can be subjected to heat to deblock the isocyanate functionality and in a second reaction step then be reacted with the amine or hydroxy terminal groups of the dendrimer. The foregoing may be illustrated by way of the following: 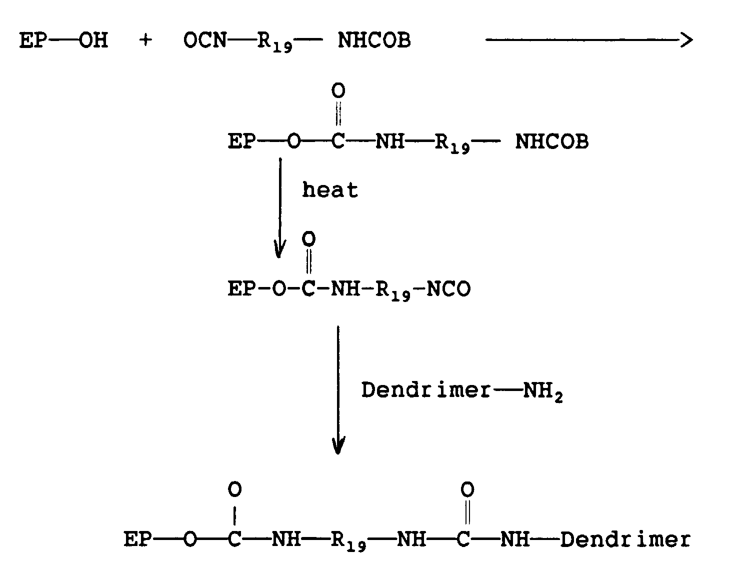 In both cases, the polyolefin pre-arm becomes coupled to the dendrimer backbone via urea urethane bonds.

As will be appreciated by those skilled in the art, instead of isocyanates, use can be made of other polyfunctional coupling compounds to link chemically the polyolefin pre-arms to the functional groups of the dendrimer. Also suitable as such linking compounds are di- and tricarboxylic acids and their corresponding esters or anhydrides, amino alkyl alcohols and haloalkyl amines, haloalkyl alchols.

Particularly useful in the preparation of star branched polyolefins is the dendrimer-like backbone obtained from Michael reaction of symmetrical polyamines with unsaturated polycarboxylic acid esters, such as the reaction of methyl itaconate with tris(ethylamino) benzene wherein the first generation product provides twelve carboxy sites for coupling of polyolefin arms. The first generation dendrimer can be expanded with alternating reactions of, for example, 1,4-diaminobutane and methylitaconate or the core amine, tris(ethylamino) benzene can be expanded with one or more generations of N-tosylaziridine to expand the number of arms. With methyl itaconate the number of branches is expanded by a factor of four for each amino group in the core or branched dendrimer backbone:

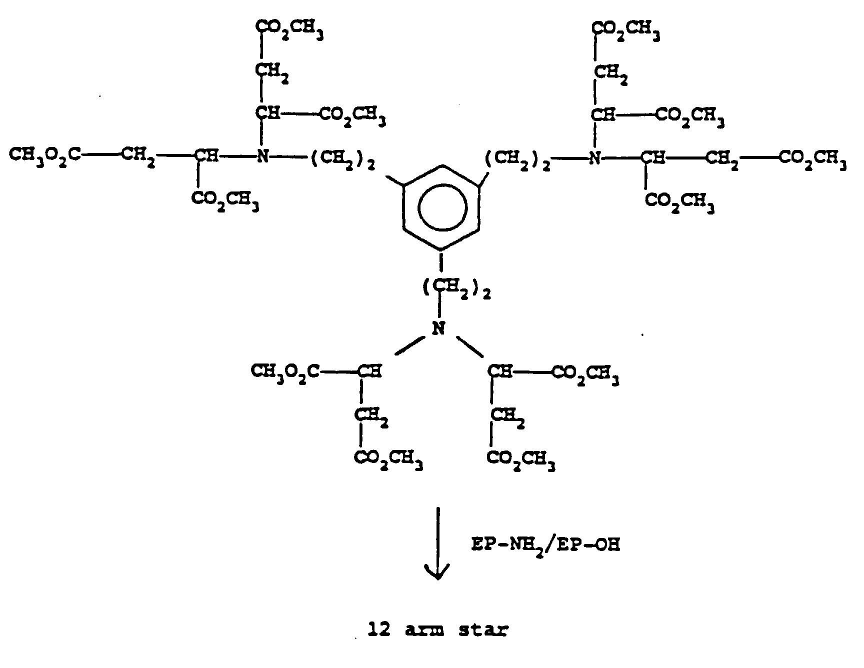

Useful as melamine derivatives in preparation of dendrimer backbones are structures defined by the formula: 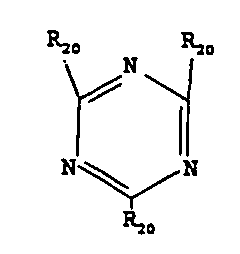 wherein R₂₀ is NH₂-(CH₂)ₓOH, -(CH₂)ₓNH₂, -NH(CH₂)ₓCO₂H, -NH(CH₂)ₓOH, -NH(CH₂)ₓNH₂ or -COCH₃, and x is 1-5.

In the typical preparation of a dendrimer, the reaction sequence is carried out in a stepwise manner. Therefore, it is possible to change the polyfunctional compound at any generation or half generation and introduce a different polyfunctional compound that will impart a special function or characteristics to the dendrimer backbone. In one embodiment of this concept, that special characteristic is antioxidant properties, such as those possessed by aromatic polyamine compounds. Thus, the polyfunctional reagent used in forming the last generation dendrimer should be one capable of reaction with aromatic polyamine compounds possessing antioxidant characteristics. Once the aromatic polyamine is reacted with the dendrimer, its generation can be repeated, the original generations can be repeated, or it can, in turn, be coupled with a polyolefin pre-arm to form a branched polyolefin with antioxidant properties and a dendrimer molecule as the core or backbone.

This concept of the invention can be represented by a number of specific techniques. For example, it is possible to use, as the core, diaminobutane which can then be reacted with acrylonitrile followed by hydrogenation to form a first generation dendrimer as described previously. That dendrimer, after conversion to the corresponding amine, is reacted, in the next step, with a methylacrylate to form a half generation with the structure, thus: 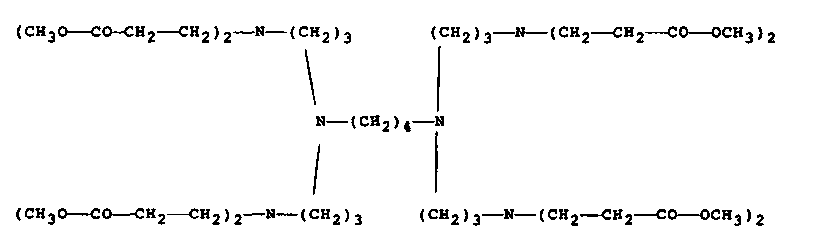 In the next step, the generation is completed for the above-described dendrimer by reaction with an aromatic polyamine compound having antioxidant properties. A number of such compounds are known, including 4,4'-diaminodiphenylamine. Other suitable compounds are aminoalkyl substituted phenothiazines; representative of the latter group is 4,4'bis-(2-aminoethyl)phenothiazine. Those compounds, containing aromatic amine groups, are reactive with the terminal groups of the dendrimer containing the acetate groups to form the corresponding amides with the aromatic polyamines. The new dendrimer backbone is the product of that reaction, and can be illustrated by way of the following: 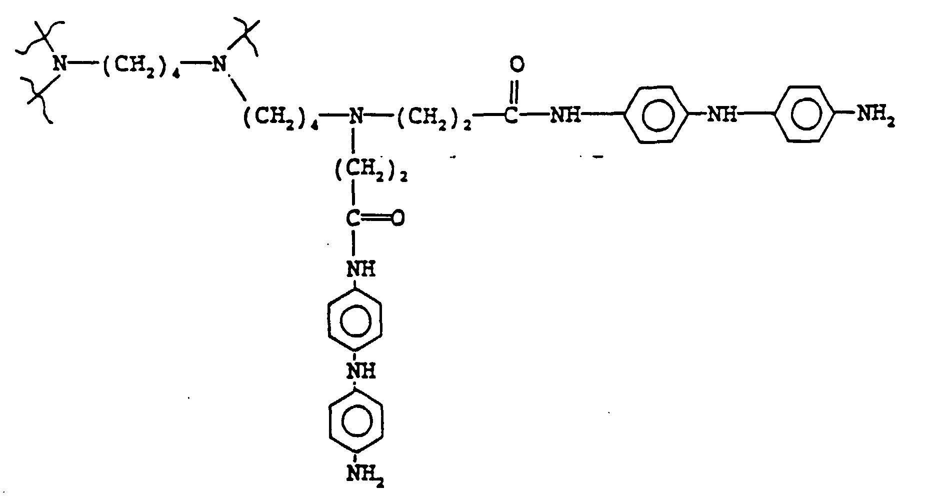 It will be understood that the unidentified bonds in the foregoing structure contain the same groups.

That dendrimer backbone, containing terminal amine groups, can then be reacted with a functionalized polyolefin pre-arm containing, for example, a terminal maleic anhydride group to thereby couple the polyolefin pre-arm to the amine groups to form an imide linking the polyolefin pre-arm to the dendrimer structure. The macromolecules thus contain both the polyolefin arm, as well as a aromatic polyamine group to improve the antioxidant characteristics of the dendrimer. It will be noted that each branch of the polymer containing the polyolefin arm also contains an aromatic polyamine group in a one-to-one distribution.

As will be appreciated by those skilled in the art, use can also be made instead of the 4,4'bis-(2-aminoethyl)phenothiazine, the phenothiozines described above, as well as other aromatic polyamine compounds.

As will also be appreciated by those skilled in the art, other sequences of reagents in forming the dendrimer may likewise be used. It is important, however, that the immediately preceding dendrimer prior to reaction with the aromatic polyamine compound has a functional group which is reactive with the aromatic polyamine group so as to incorporate the antioxidant-containing aromatic polyamine compound into the dendrimer molecule. As will also be appreciated by those skilled in the art, other coupling mechanisms previously described may likewise be used to couple the polyolefin pre-arm to the terminal amine of this type of dendrimer molecule. Instead of a polyolefin pre-arm containing a maleic anhydride group, it is also possible to employ a polyolefin pre-arm functionalized with a terminal expoxy group or a terminal carboxylic acid or an acid chloride group or a tosylate.

As an alternative technique one can couple polyolefin pre-arm directly via a polymerization reaction by incorporation of difunctional polymerizable monomers in the form of vinyl isocyanates. Examples of such monomers are IEM and TMI as previously described. In accordance with this embodiment, the amine or hydroxy terminal polyolefin is directly reacted with the TMI or IEM via the isocyanate functionality to provide a new unsaturated polyolefin pre-arm with a urea, urethane bond. The unsaturation in this new pre-arm can be subjected to conventional free radical or anionic polymerization conditions either alone or in combination with other styrene-like or (meth)acrylate-like comonomers known to undergo such copolymerization reactions. Branched polymers as thus described can be exemplified by the following equation using styrene and methyl methacrylate as comonomers: 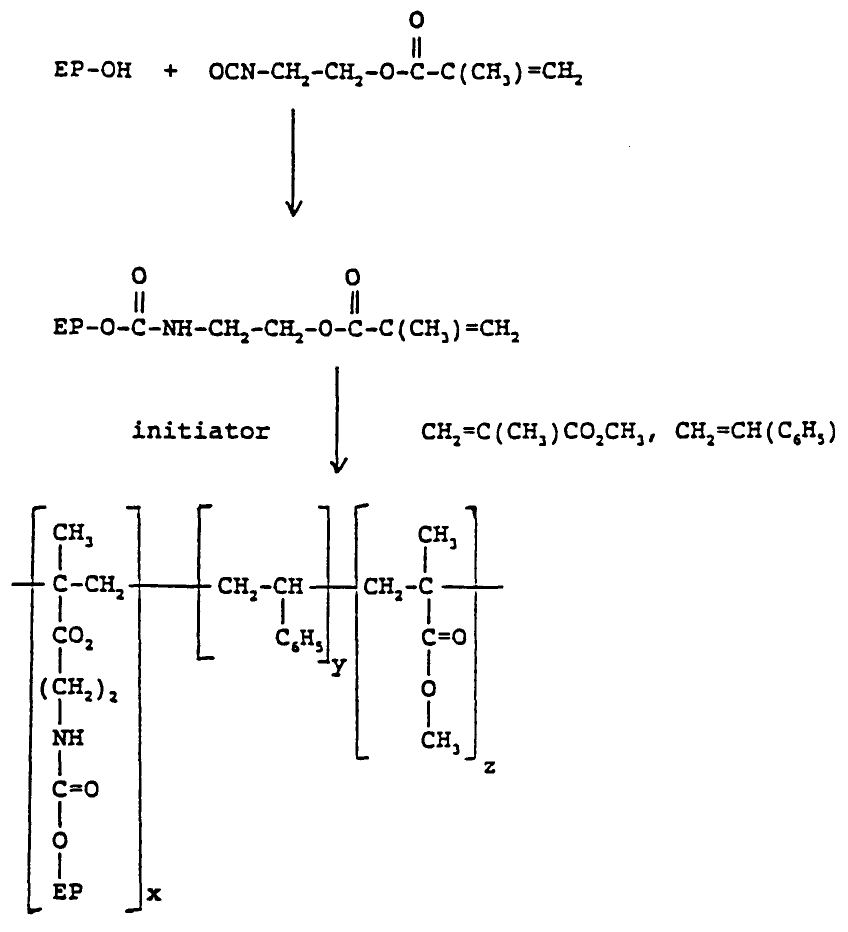 wherein x is 5 to 30 weight percent IEM derivatized polyolefin arm, y is 25 to 65 weight percent styrene and z is 30 to 70 weight percent methylmethacrylate.

It is also possible, in accordance with a further embodiment of the invention, to utilize, in forming a reactive polymeric backbone, multifunctional isocyanates or extended isocyanates. One technique that can be employed is based on the known ability of isocyanates to trimerize to form a very stable six-member ring structure. Such compounds are known as isocyanurates, and have the structure: 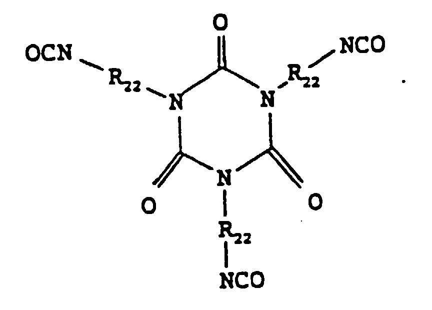 wherein each R₂₂ group is an alkyl group of 1 to 8 carbons, an aryl group, an alkyl phenyl group. Some more common isocyanurates commerically available are the trimers from the trimerization of 1,6-diisocyanato hexamethylene, 2,4-toluene diisocyanate, isophoronediisocyanate, toluidine diisocyanate, 4,4'dicyclo-hexylmethane diisocyanate. The isocyanurate can be reacted with an amine or hydroxy terminal polyolefin pre-arm to provide a branched polyolefin with three arms. Alternatively, as more typical with higher molecular weight polyolefins, the reaction will stop after the incorporation of one to two arms providing instead a "linear polyolefin". Those "linear polyolefins" can be coupled with a monomer having multi-hydroxy or multi-amine functions, as provided by simple polyols and melamines or its derivatives as previously defined. Polyols useful in the practice of this invention include glycerine, glycols, pentaerythritol, Pluracol® polyols, benzenes, tris(alkylamino) benzene, trimethylolpropane, trihydroxybenzene, triaminobenzene, first generation dendrimer like molecules formed by reaction of diamines (or poly amines) with ethylene oxide, such as Quadrols® (trademark of BASF Wyandotte Corporation) tricarboxylic acids, etc. Branched polyolefins with 6 to 24 arms coupled by way of a urea/urethane linkage are conveniently prepared.

Use of "extended isocyanates" as a backbone of this invention relies on the reaction of selective diisocyanates with polyols or melamines followed by a secondary trimerization with the corresponding selectively blocked diisocyanate as represented in the following equation when an excess of toluene diisocyanate is reacted with pentaerythritol: 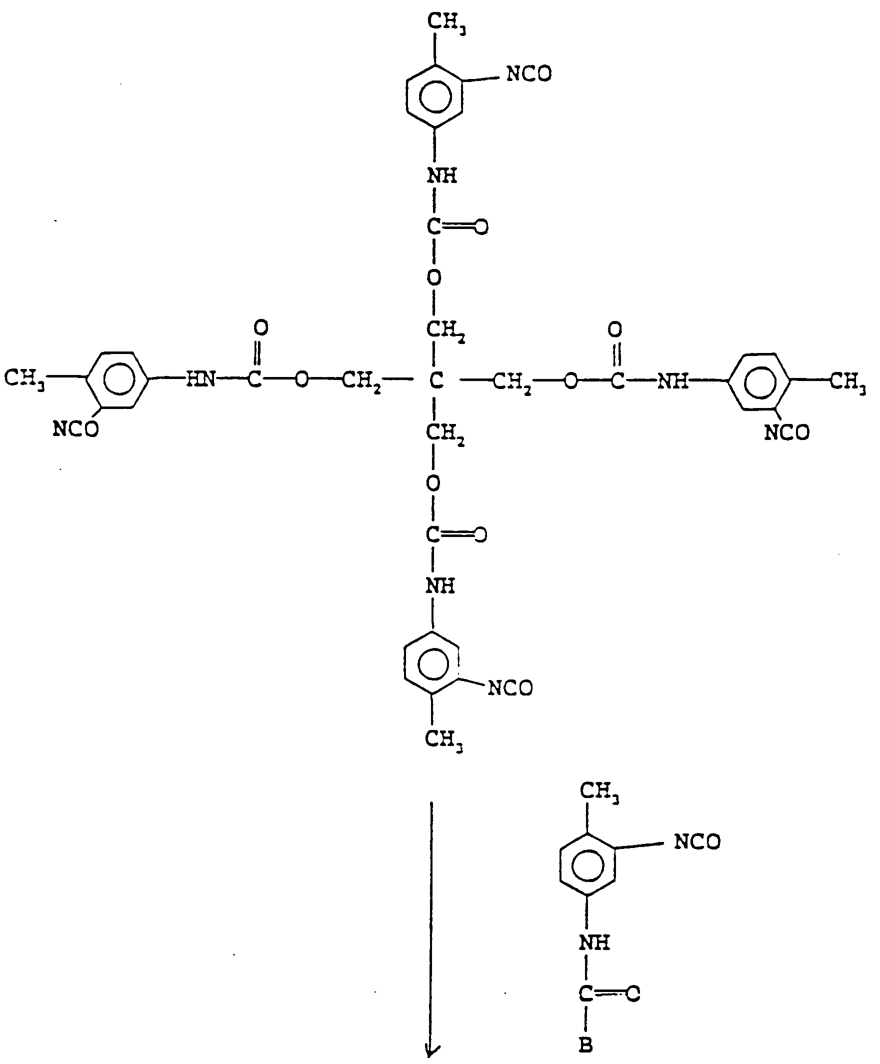 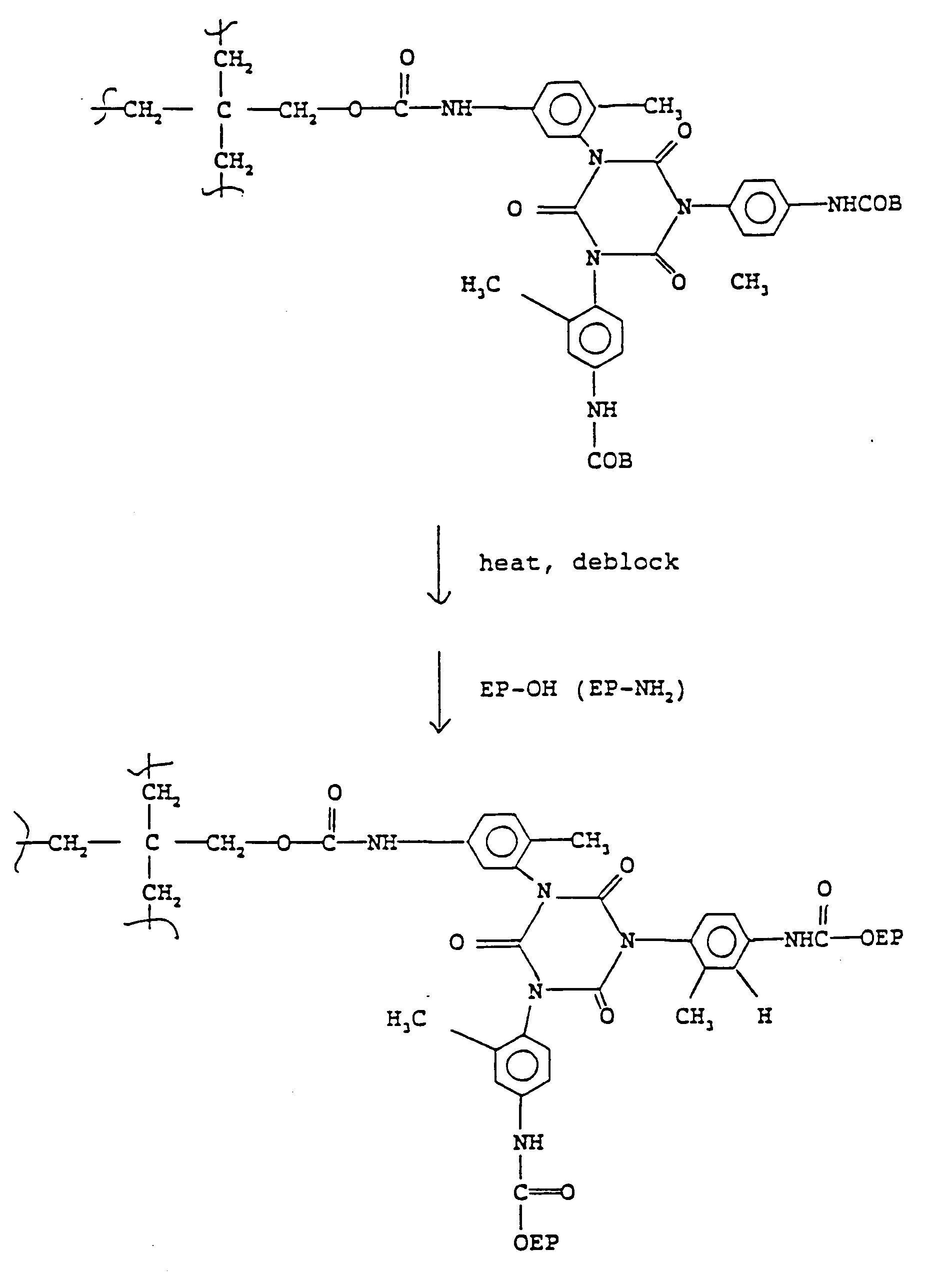 By "selective diisocyanate" it is understood in the art that the two NCO groups are not equally reactive, that is, one of the NCO groups will preferrably undergo blocking and trimerization reactions, leaving the other NCO for later chemical modification. Toluene diisocyanate and isophorone diisocyanate (see J. Coatings Technology, Vol. 54, no. 687, 1982, pg. 43) are examples of selective diisocyanates.

An "extended isocyanate" backbone can also be prepared by alternating the reactions of polyols and selective diisocyanates. An example of this type of backbone is formed by the reaction of first trimethylol propane with toluene diisocyanate. Initially the para NCO group reacts exclusively. Further reaction of this isocyanurate with pentaerythritol provides a core molecule with nine hydroxy groups. These can be reacted with an equivalent of toluene diisocyanate to provide a branched backbone with nine isocyanate groups, which, when reacted with hydroxy or amino terminal polyolefins, generates a nine arm star branched polyolefin. Reaction of a isocyanurate or other triisocyanates with other polyols and selective diisocyanates in sequence can generate a backbone with six to fifteen arms.

The chemical reactions employed in the practice of this invention to couple the polyolefin pre-arm with the reactive polymer are generally known. Reaction times will generally be much longer in the practice of this invention than that practiced for the same chemical reaction with conventional monomeric chemicals.

As will be appreciated by those skilled in the art, as the molecular weight of the polyolefin pre-arm to be coupled with the backbone increases the number of (terminal) double bonds in the polyolefin pre-arm decreases on a weight basis. That in turn results in a reduction of the coupling efficiency of the polyolefin pre-arms to the reactive polymeric backbone. Thus, longer reaction times are required to produce the branched polymer of the invention. Similarly, steric factors can play a role in reducing the coupling efficiency, making it more difficult to couple the polyolefin pre-arm to adjacent functional groups in the reactive backbone.

In short, the greater the molecular weight of the polyolefin pre-arm to be coupled with the reactive polymeric backbone, the longer is the reaction time in affecting that coupling and the less complete is the substitution of the polyolefin pre-arm on the functional groups of the reactive polymeric backbone.

The number, in the reactive polymeric backbone, of repeating units with functionality capable of being coupled to a plurality of polyolefin pre-arms depends, to some degree, also on the intended application of the polymer. As a general rule, it is preferred that the reactive polymeric backbone contains at least 10 functional groups through which polyolefin arms can be linked to form a highly branched structure. In the preferred practice of the invention, it is often desirable to employ a reactive polymeric backbone having the capability of forming at least 4 to 300 polyolefin arms linked to the polymeric backbone.

While it is generally preferred, as indicated above, that the reactive polymeric backbones contain at least 10 functional groups through which the polyolefin arms can be coupled, it is necessary in most embodiments that the reactive polymeric backbone contains at least ten functional groups. That is so because, in most of the embodiments of this invention, the reaction to couple the polyolefin pre-arm to the reactive polymeric backbone is not quantitative with respect to utilization of backbone functionality. As explained above, the molecular weight of the polyolefin pre-arm can reduce the coupling efficiency of high molecular weight polyolefin pre-arms to the reactive polymeric backbone; that effect is often reinforced by steric factors associated with the coupling site on the reactive polymeric backbone and can prevent, with higher molecular weight polyolefin pre-arms the coupling of polyolefin pre-arms to immediately adjacent functional groups in the polymeric backbone. In those embodiments in which it is possible to couple lower molecular weight polyolefin pre-arms, the coupling reaction will proceed in a quantitative or substantially quantitative manner, and higher branched polymers can be produced with the use of only 6 to 10 functional groups in the reactive polymeric backbone.

The coupling reaction can be carried out in accordance with a variety of reaction conditions as described in the art. It is generally possible, and sometimes desirable, to carry out the reaction in the presence of a solvent such as aliphatic hydrocarbons (such as pentane, hexane, heptane, pentamethylheptane or distillation fractions); aromatic hydrocarbons (such as benzene or toluene); halogenated derivatives of aliphatic or aromatic hydrocarbons (such as tetrachloroethylene) or ethers (such as tetrahydrofuran or dioxane). The relative properties of the pre-arm and the polyhydrosilane are controlled to ensure that the desired number of polyolefin pre-arms becomes linked by the addition reaction to the reactive polymeric backbone. The solution reaction is generally carried out at a concentration of 2 to 50 weight percent of polymeric reactant. The polymeric reactants are ratioed according to the moles of (terminal) unsaturation (C=C) in the polyolefin pre-arm to the moles of Si-H bonds in the polyhydrosilane. Because the coupling of polyolefin pre-arms to the hydrosilane groups present in the backbone controls the number of arms linked to the backbone, a molar excess of polyolefin pre-arms ensures the maximum number of polyolefin arms linked to the polymer backbone, when maximum branching is desired. In general, mole ratios range from 1:100 to 10:1.

The reaction temperature is not a critical variable, and depends somewhat on the reactants used in carrying out the coupling reaction. Generally, temperatures ranging from 15 to 300°C can be used for that purpose. Similarly, the reaction time is likewise not critical and depends on the reactants employed. As a general rule, reaction times are those sufficient to couple the polyolefin pre-arm to the reactive polymer backbone, and generally range from 10 seconds up to 300 hours.

The choice of reactive polymeric backbone and specific functionalized polyolefin pre-arm is dependent on the intended end use of the branched polymer. Pre-arms and reactive polymeric backbones are chosen so that the chemical bond coupling them will be stable under the conditions of intended use.

Branched polyolefins of the present invention, once formed, are stable and can be modified by additional chemical reactions. One such reaction is functionalization by means of a free radical graft reaction or a graft polymerization reaction. Polyolefin grafted polymers are themselves well known to those skilled in the art. Similar chemical reactions can be used to graft the branched polyolefins of this invention. Suitable graft monomers include unsaturated dicarboxylic acid anhydrides and their corresponding acids, preferably those having the general formula: 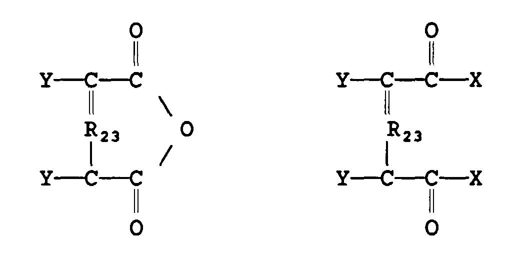 wherein R₂₃ is an alkyl group having 0 to 4 carbon atoms and Y is preferably hydrogen but may also be an organic group such as a branched or straight chain alkyl group, an anhydride, a ketone group, a heterocyclic group or other organic group containing 1 to 12 carbon atoms. In addition, Y can be a halogen such as chlorine, bromine or iodine. X can be OH or an alkoxy group wherein the alkyl group contains 1 to 8 carbon atoms. Preferred among those graft monomers are maleic anhydride, itaconic anhydride.

Also suitable as the graft monomer for functionalizing a branched polyolefin are the derivatives of olefinically unsaturated carboxylic monomers such as, acrylic or methacrylic acid, or their esters, graft monomers which are likewise known to those skilled in the art. Typically, acrylic and methacrylic acid derivative contain 4 to 16 carbon atoms. Preferred among the acrylic and methacrylic acid graft monomers are those having the structure: 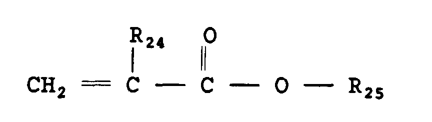 wherein R₂₄ is hydrogen or C₁ to C₄ alkyl (e.g., methyl, ethyl, etc.) and R₂₅ is selected from the group consisting of a C₁ to C₈ alkyl group, a keto functional alkyl group, an epoxy functional alkyl group, -NH₂ or -NR'₂ where R' can be H or C₁ to C₈ hydrocarbon and both R' groups need not be the same. Particularly preferred among the group of acrylic or methacrylic graft monomers are glycidyl methacrylate, methylacrylate, methylmethacrylate, ethylmethacrylate and aminopropylmethacrylate, and acrylamide.

Another group of graft monomers which can be used to functionalize a branched polyolefin are vinyl amines containing 2 to 25 carbon atoms, and preferably heterocyclic vinyl amines. Such amines are themselves known as functionalizing graft monomers and include allyl amines, N-vinyl pyridines, N-vinyl pyrrolidones, vinyl lactams, vinyl carbazoles, vinyl imidazoles and vinyl thiazoles as represented by 2-vinyl pyridine, N-vinyl pyrrolidone, vinyl caprolactam, 1-vinyl imidazole, allyl amine, 4-methyl-5-vinyl thiazole and 9-vinyl carbazole. Such graft monomers are described in detail in USP No. 4,340,689, the disclosure of which is incorporated herein by reference.

As will be appreciated by those skilled in the art, other vinyl monomers described in the prior art as suitable for functionalizing such a branched polyolefin may likewise be used in the practice of the present invention. Examples of such further vinyl compounds are the vinyl silanes and vinylbenzyl halides as represented by vinyltrimethoxysilane, vinyldiethychlorosilane, vinylbenzylchloride and the like. Further descriptions of suitable silane graft monomers are described in USP No. 4,340,689, the disclosure of which is incorporated herein by reference.

The polymers of the present invention can be prepared according to the following process, which comprises at least the following steps:
A) Shearing of the initial polyolefin pre-arms, as to obtain a material with a polydispersity equal to or less than 1.8,
B) if necessary, functionalizing the pre-arm,
C1) coupling the polyolefin pre-arms from A) or B) to the reactive polymeric backbone, or
C2) polymerization of the polyolefin pre-arm.

The branched polymers of the present invention are useful in a wide variety of applications. Thus, the broad scope of application of the polymers of the present invention is made possible by the ability to control in independent chemical reactions both the composition of the arms and the number of arms linked to the polymer backbone. Thus, the choice of the composition of the arms will largely determine the properties of the polymer, such as whether it is an elastomeric polymer, a thermoplastic polymer and the like.

In general, the polymers of the present invention have outstanding resistance to weathering, good aging properties when subjected to elevated temperatures and can be compounded with fillers and plasticizers in the production of low cost plastics useful as automotive and industrial components. Typical of such applications are those involving radiator hoses, weather stripping and gasket seals. The polymers of the present invention can also be used in the insulation of electrical wire and cables and also can be used as (impact) modifiers for various types of thermoplastics. In addition, the polymers of the present invention can likewise be used in the formulation of adhesives, as additives for lubricating oils and fuels and as rheology modifiers.

As well-known to those skilled in the art, hydrocarbon polymers have been employed for modifying the performance properties of petroleum distillates. The viscosities of petroleum distillates, particularly lubricating oils, vary with temperatures and since performance criteria today demand ever broader temperature ranges for use, additives are incorporated into the lubricating oil to control the viscosity-temperature relationship. This viscosity-temperature relationship of an oil is known as its viscosity index (VI). The higher the viscosity index, the less the change in viscosity with temperature is. Therefore, an ideal viscosity index improver (VII) would exhibit a negligible viscosity contribution to the lubricating oil at low temperature while providing a large viscosity contribution at temperatures of engine operation.

Traditionally, essentially linear olefin copolymers, particular ethylene-propylene copolymers (referred to as OCP's) have been employed in lubricating oils as viscosity index improvers, pour point depressants and dispersants.

The OCP's have the ability to provide a high thickening contribution or thickening power to the lubricating oil composition. Thickening power is generally defined as the difference in the kinematic viscosity of a dilute solution of an OCP mixed with oil and the diluent oil. For example an oil solution containing from 1 to 2 percent of an OCP which provides a thickening power of 6 to 7 centistokes measured at 100 °C generally indicates acceptable viscosity index improvement performance.

Within a class of structural similar polymers, the higher the molecular weight, the greater the viscosity it imparts to the lubricating oil. However, higher molecular weight polymers exhibit a greater tendency to breakdown under the shear and high temperature conditions normal in engine operation. This, of course, results in a loss in viscosity and the polymers are referred to as lacking in shear stability. Thus, a balance must be achieved between the thickening contribution of the polymer and its tendency to degrade. This shear stability is typically measured as a percent viscosity breakdown on shear under a standard set of conditions. A value of below 30 percent viscosity breakdown in a polymer is shear stable as that term is understood in the art.

The branched polymers of the invention are very stable against shear and as a consequence are very well suited for use as an additive for a lubricating oil or a fuel.

The following examples are provided to illustrate the invention.

The composition of the polymers was determined by means of Fourier Transform Infrared Spectroscopy. The molecular weight of the polymers was determined with Size Exclusion Chromatography-Differential Viscometry (SEC-DV) at a temperature of 150°C using 1,2,4-trichlorobenzene as solvent. A Waters M150C GPC with DRI-detector and a Viscotek Differential Viscometer (DV) model 100-02, the detectors connected in parallel, was used with Toyo Soda (TSK) GMHXL-HT, mixed bed (4x) columns (plate count of 25000 as determined on n-C28H58). The SEC-DV technique was used to calculate the number average molecular mass (Mₙ) in units of g/mol, the weight average molar mass (M_{w}) in units of g/mol, and the molecular mass distribution (${\text{MWD=M}}_{\text{w}} {\text{/M}}_{\text{n}}$) using a universal calibration curve based upon polyethylene as a standard.

### Examples

### Example I

### Production EP-copolymers with narrow molar mass distribution

A Ziegler-Natta linear EP-copolymer was subjected to a solution shearing procedure in a homogenizer equipment (a Manton-Gaulin homogenizer). 5 g of EP-copolymer with a C₂ concentration of 55 mole% and Mₙ=110∗10³ g/mol, M_{w}=230∗10³ g/mol and M_{z}=380∗10³ g/mol, was dissolved in a 5 wt% solution of boiling point petrol at room temperature. The solution was poured into the homogenizer and shear degraded during several passages through the nozzle of the homogenizer. The applied pressure was 50 MPa. The solutions were guided through a cooling device before homogenizing. The EP-copolymer was precipitated after a different number of cycles.

In the table below, the molecular parameters of the copolymers as a function of the number of cycles are shown. Mₙ, M_{w}, M_{z} are expressed as 10³ g/mol, PD is polydispersity as defined before.

| number of cycles | Mₙ | M_{w} | M_{z} | PD |
|---|---|---|---|---|
| 0 | 110 | 230 | 380 | 2.11 |
| 6 | 88 | 136 | 175 | 1.64 |
| 10 | 87 | 132 | 170 | 1.59 |
| 15 | 87 | 125 | 160 | 1.46 |

### Example II

### Synthesis of the initial pre-arm

An ethylene/propylene polymerization was performed in a 1.0 l continuous stirred type reactor. Solvent, monomers and catalyst components are continuously fed to the reactor and the polymer solution was continuously removed from the reactor. The following parameters were used:
Hexane: 4.67 kg/hr
Ethylene: 359 g/hr
Propylene: 426 nl/hr
Catalyst [Et(Cp*)₂NMe₂TiMe]: 7.3 µmol/hr
Cocatalyst [Trioctylaluminium]: 0.1 mmol/hr
Cocatalyst [BF₂₀/DiMeAnilinium salt]: 0.2 mmol/hr
Production: 466 g/hr
Temperature: 120°C
The obtained initial pre-arm has the following characteristics:
- Mₙ:: 69∗10³ g/mol
- M_{w}:: 150∗10³ g/mol
- PD:: 2.2
- C₃ (wt%):: 43.1

### Shearing of the initial pre-arm

The obtained initial pre-arms were subjected to a solution shearing procedure as described above, however with a different solvent i.e. Standard Neutral Oil (SNO) 100, having a kinematic viscosity at 100°C =4.0 cSt. 5 Wt% EP-copolymer was dissolved in this oil at 100°C. The number of cycles of the solution through the nozzle of the homogenizer now being 15. The sheared pre-arms were precipitated from the solution: first a 5:1 solution of tetrahydrofuran with the sheared oil solution was prepared and subsequently a non-solvent for the EP-copolymer, e.g. acetone, in a ratio of 3:1 was added to this solution. The resulting precipitate was filtered off. This procedure was repeated three times. The molecular parameters of the sheared pre-arms are listed in the table below.

| Number of cycles | Mₙ | M_{w} | M_{z} | PD |
|---|---|---|---|---|
| 0 | 69 | 150 | 270 | 2.17 |
| 15 | 61 | 88 | 110 | 1.44 |

The pre-arms were subsequently coupled as follows.

### Coupling of the sheared pre-arms to the polymeric backbone:

The pre-arms were dissolved in pentamethylheptane. Polymethylhydrogensiloxane (=PMHS) containing an average of 48 SiH groups per molecule was added to the pre-arms in solution to provide a molar ratio of SiH to C=C in the pre-arms of 5/1. The reaction mixture was subsequently heated to 90°C. The catalyst solution was prepared by dissolving H₂PtCl₆.6H₂O in isopropanol. Dichlorophenyl acetic acid ethyl ester (DCPAE) was added to this catalyst solution to provide a molar ratio of DCPAE to platinum in the catalyst of 10. Afterwards the catalyst solution was added to the polymer solution in a molar ratio of Pt to C=C in the pre-arms of 1/1000. The reaction mixture as stirred at 90°C for 48 hours. After this time interval, the reaction was blocked with an excess of 1-octene. The polymer recovered after evaporation of the solvent under vacuum at 80°C was analyzed with SEC-DV. The Mark-Houwink plot indicated extensive branching in the polymer.

## Claims

1. A branched polymer characterized in that the polymer is in the form of a comb, star, nanogel or any structural combination thereof comprising a plurality of polyolefin arms selected from the group comprising polymers of 1-alkenes or combinations thereof linked to a polymeric backbone, said backbone having repeating units containing a group selected from the group consisting of aliphatic groups, aromatic groups, heteroatom containing groups and combinations thereof and wherein the polyolefin arms have a polydispersity equal to or less than 1.8.

2. A branched polymer as defined in claim 1, characterized in that the polydispersity of the polyolefin pre-arms is at least 1.2 and at most 1.5.

3. A branched polymer as defined in claim 1, characterized in that the polydispersity of the polyolefin pre-arms is least 1.2 and at most 1.3.

4. A branched polymer as defined in any of claims 1-3, characterized in that the polymer is in the form of a nanogel.

5. A branched polymer as defined in any one of claims 1-4, characterized in that the polyolefin pre-arms are homo- or copolymers from 1-alkenes with 2-20 carbon atoms.

6. A branched polymer as defined in any one of claims 1-5, characterized in that the polyolefin pre-arms are homo- or copolymers from ethylene and/or propylene.

7. A branched polymer as defined in any one of claims 1-6, characterized in that the polymeric backbone is a polysiloxane.

8. A branched polymer as defined in any one of claims 1-7, characterized in that the number average molecular weight of the polyolefin pre-arm is between 1,000 and 80.000 g/mol.

9. A process for the preparation of a branched polymer as defined in any one of claim 1-8, comprising at least the following steps:
A) shearing of the initial polyolefin pre-arms, as to obtain a material with a polydispersity equal to or less than 1.8,
B) if necessary, functionalizing the pre-arm,
C1) coupling the polyolefin pre-arms from A) or B) to the reactive polymeric backbone, or,
C2) polymerization of the polyolefin pre-arm.

10. Use of a branched polymer as defined in any one of claims 1-8 as an impact modifier.

11. Use of a branched polymer as defined in any one of claims 1-8 as a rheology modifier.

12. Use of a branched polymer as defined in any one of claims 1-8 as additive for a lubricant oil or a fuel.
